# EUROPEAN PATENT APPLICATION

(11) **EP 2 228 738 A1**
(43) Date of publication of application: **15.09.2010**
(21) Application number: 10155161.2
(22) Date of filing: 02.03.2010
(51) Int. Cl.: G06F 17/30

(54) **Information providing server, information providing system, information providing method and program**

(30) Priority: 09.03.2009 JP 2009055774
(71) Applicant: Sony Corporation, Tokyo 180-0075 (JP)
(72) Inventor: Yamasuge, Hiroyuki, Tokyo 108-0075 (JP); Abe, Shinichiro, Tokyo 108-0075 (JP); Arisawa, Shigeru, Tokyo 108-0075 (JP); Usui, Takashi, Tokyo 108-0075 (JP); Esaka, Seiji, Tokyo 108-0075 (JP); Sonoda, Shuhei, Tokyo 108-0075 (JP); Takada, Masayuki, Tokyo 108-0075 (JP)
(74) Representative: Beder, Jens

(57) **Abstract**

An information providing server of present invention including a state information acquiring unit for acquiring state information related to a state of a user using a client terminal detected at the client terminal connected through a communication network, a database for accumulating data of a content to be used by the user, a selection unit for selecting a part of the data accumulated in the database based on the state information, and a transmission unit for transmitting the data selected by the selection unit to the client terminal.

## Description

### BACKGROUND OF THE INVENTION

### Field of the Invention

The present invention relates to an information providing server, an information providing system, an information providing method, and a program.

### Description of the Related Art

In recent years, a system of accumulating information to be used by a user in a server, and having the client terminal of the user synchronize all information of the server is known, as described in Japanese Patent Application Laid-Open Nos. 2003-163735 and 2000-10846.

As described in Japanese Patent Application Laid-Open No. 2006-39930, a system in which a user inputs his/her preference information through a client terminal, and receives contents corresponding to the preference information from a server is known.

### SUMMARY OF THE INVENTION

However, in the techniques described in Japanese Patent Application Laid-Open Nos. 2003-163735 and 2000-10846, an issue that the capacity of the client storage device lacks arises if all data are synchronized with the client when the amount of information of the server is increased. Furthermore, if the client is not able to mount the storage device of sufficient capacity due to miniaturization of the client, synchronizing all data of the server with the client becomes difficult and the issue that the capacity of the client storage device lacks arises. Thus, all information of the server including even the information not desired by the user is synchronized when all information of the server is synchronized, and hence the storage device having an extremely large storage capacity is to be mounted on the client and the processing time for synchronization also becomes enormous.

Moreover, even when synchronizing only a database corresponding to a user among databases of the server with a database of the client, all information corresponding to the relevant user is synchronized (copied). Thus, even data not desired by the user is copied for the present.

In the technique described in Japanese Patent Application Laid-Open No. 2006-39930, the user himself/herself inputs the preference information, and thus an issue in that the preferred content is not provided unless the preference information is input arises. Furthermore, the information is not provided if the user forgets to input since the content is selected according to the input preference information, and the information potentially preferred by the user, although not recognized by the user, is not provided.

In light of the foregoing, it is desirable to provide a novel and improved information providing server, an information providing system, an information providing method, and a program capable of suppressing amount of data to synchronize to a minimum when synchronizing information accumulated in a server with a client terminal.

According to an embodiment of the present invention, there is provided, an information providing server including a state information acquiring unit for acquiring state information related to a state of a user using a client terminal detected at the client terminal connected through a communication network, a database for accumulating data of a content to be used by the user, a selection unit for selecting a part of the data accumulated in the database based on the state information, and a transmission unit for transmitting the data selected by the selection unit to the client terminal.

In this configuration, the selection unit includes a difference data selection part for selecting difference data corresponding to a difference between existing accumulated data already accumulated in the database of the client and data selected based on the state information; and the transmission unit transmits the difference data to the client terminal.

In this configuration, the difference data selection part selects the difference data based on data update date and time or data update number for each of the existing accumulated data and the data selected based on the state information.

In this configuration, the state information related to the state of the user is at least one of time information, place information, operation information, video information, audio information, pressure information, smell information, temperature information, humidity information, biological information, and purchase information.

In this configuration, the information providing server according to claim 1, further including, an analyzing unit for analyzing information related to preference, habit, or activity schedule of the user based on the state information; and the selection unit selects a part of the data accumulated in the database based on the information related to the preference, the habit, or the activity schedule of the user based on the state information.

In this configuration, the information providing server according to claim 1, further including an analyzing unit for analyzing information related to activity in the past or future of the user based on the state information, and the selection unit selects a part of the data accumulated in the database based on the information related to the activity in the past or the future of the user.

In this configuration, the information related to the past activity is information created from view history, operation history, purchase history, or activity history by the user.

In this configuration, the information related to the future activity is information created from information saved in agenda, electronic mail, or notepad used by the user.

In this configuration, the selection unit selects a part of the data when a predetermined event occurs; and the transmission unit transmits the selected data to the client terminal when the predetermined event occurs.

In this configuration, the transmission unit transmits the selected data to the client terminal and also transmits a list of all data of the corresponding user to the client terminal.

In this configuration, the information providing server further including a movement path analyzing unit for analyzing information related to future movement path of the user based on the state information. The selection unit selects a part of the data accumulated in the database based on the information related to the movement path.

In this configuration, the information providing server further including a communication information acquiring unit for acquiring communication information related to a communication environment of the movement path as the state information. The selection unit selects a part of the data accumulated in the database based on the information related to the movement path and the communication information.

In this configuration, the information providing server further including a preference and habit analyzing unit for analyzing information related to preference or habit of the user based on the state information. The selection unit selects a part of the data accumulated in the database based on the information related to the movement path, the communication information, and the information related to the preference or the habit of the user.

According to another embodiment of the present invention, there is provided an information providing system including an information providing server and a client terminal. The information providing server including a state information acquiring unit for acquiring state information related to a state of a user using a client terminal, a database for accumulating data of a content to be used by the user; a selection unit for selecting a part of the data accumulated in the database based on the state information, and a transmission unit for transmitting the data selected by the selection unit to the client terminal. The client terminal including a state information detection unit for detecting the state information, a transmission unit for transmitting the state information to the information providing server connected through a communication network, and a database with which the selected data transmitted from the information providing server is synchronized.

According to another embodiment of the present invention, there is provided an information providing method, including the steps of detecting state information related to a state of a user using a client terminal at the client terminal, transmitting the state information to an information providing server connected through a communication network, selecting a part of data from a database accumulating data of a content to be used by the user at the information providing server based on the state information, transmitting the selected data to the client terminal, and synchronizing the database with the selected data transmitted from the information providing server at the database of the client terminal.

According to another embodiment of the present invention, there is provided a program for causing a computer to function as means for acquiring state information related to a state of a user using a client terminal detected at the client terminal connected through a communication network, accumulating data of a content to be used by the user, selecting a part of the data accumulated in the database based on the state information, and transmitting the data selected by the selection unit to the client terminal.

According to the embodiments of the present invention, the amount of data to synchronize can be suppressed to a minimum when synchronizing the information accumulated in the server to the client terminal.

### BRIEF DESCRIPTION OF THE DRAWINGS

FIG. 1 is a schematic view showing a concept of a system 1000 according to embodiments of the present invention;
FIG. 2 is a block diagram showing a functional configuration of a server and a client in a first embodiment;
FIG. 3 is a schematic view showing a concept of transmission and reception of data between the server and the client in the first embodiment;
FIG. 4 is a schematic view showing a concept of transmission and reception of data between the server and the client in the first embodiment;
FIG. 5 is a schematic view showing a concept of transmission and reception of data between the server and the client in the first embodiment;
FIG. 6 is a schematic table showing an example where a database of the server and a database of the client are synchronized in the first embodiment;
FIG. 7 is a schematic table showing an example where a database of the server and a database of the client are synchronized in the first embodiment;
FIG. 8 is a schematic table showing an example where a database of the server and a database of the client are synchronized in the first embodiment;
FIG. 9 is a schematic table showing an example where a database of the server and a database of the client are synchronized in the first embodiment;
FIG. 10 is a flowchart showing a typical process of the first embodiment;
FIG. 11 is a flowchart showing a process of detecting a difference between data selected on the server side and data of the client, receiving the difference data from the server and synchronizing (updating) in FIG. 10;
FIG. 12 is a flowchart showing an example in which the client transmits currently holding data to the server in FIG. 11;
FIG. 13 is a block diagram showing a functional configuration of a server and a client according to a second embodiment;
FIG. 14 is a schematic view showing a concept of transmission and reception between the server and the client in the second embodiment;
FIG. 15 is a schematic view showing a concept of transmission and reception between the server and the client in the second embodiment;
FIG. 16 is a schematic view showing a concept of transmission and reception between the server and the client in the second embodiment;
FIG. 17 is a schematic table showing an example where a database of the server and a database of the client are synchronized in the second embodiment;
FIG. 18 is a schematic table showing an example where a database of the server and a database of the client are synchronized in the second embodiment;
FIG. 19 is a schematic table showing an example where a database of the server and a database of the client are synchronized in the second embodiment;
FIG. 20 is a schematic table showing an example where a database of the server and a database of the client are synchronized in the second embodiment;
FIG. 21 is a flowchart showing a typical process of the second embodiment;
FIG. 22 is a flowchart showing a process of detecting a difference between data selected on the server side and data of the client, receiving the difference data from the server and synchronizing (updating) in FIG. 21;
FIG. 23 is a flowchart showing an example in which the client transmits information for detecting the difference to the server, and the client checks occurrence of an event for re-synchronization in FIG. 22;
FIG. 24 is a block diagram showing a functional configuration of a server and a client according to a third embodiment;
FIG. 25 is a schematic view showing a concept of transmission and reception between the server and the client in the third embodiment;
FIG. 26 is a schematic view showing a concept of transmission and reception between the server and the client in the third embodiment;
FIG. 27 is a schematic view showing a concept of transmission and reception between the server and the client in the third embodiment;
FIG. 28 is a schematic table showing an example where a database of the server and a database of the client are synchronized in the third embodiment;
FIG. 29 is a schematic table showing an example where a database of the server and a database of the client are synchronized in the third embodiment;
FIG. 30 is a schematic table showing an example where a database of the server and a database of the client are synchronized in the third embodiment;
FIG. 31 is a schematic table showing an example where a database of the server and a database of the client are synchronized in the third embodiment;
FIG. 32 is a flowchart showing a typical process of the third embodiment;
FIG. 33 is a flowchart showing a process of detecting a difference between data selected on the server side and data of the client, receiving the difference data from the server and synchronizing (updating) in FIG. 32;
FIG. 34 is a flowchart showing an example in which the client transmits information for detecting the difference to the server, and the client checks occurrence of an event for re-synchronization in FIG. 33;
FIG. 35 is a block diagram showing a functional configuration of a server and a client in a fourth embodiment;
FIG. 36 is a schematic view showing an example of movement prediction;
FIG. 37 is a schematic view showing an example of movement prediction and communication optimization;
FIG. 38 is a schematic view showing an example of performing partial synchronization based on the movement prediction;
FIG. 39 is a schematic view showing an example of communication optimization and partial synchronization;
FIG. 40 is a schematic view showing the urgency of synchronization and the amount of data at the current location for the "music data" and the "moving image data" shown in FIG. 39;
FIG. 41 is a schematic view showing an operation example of the server and the client at the time of sensing in the fourth embodiment;
FIG. 42 is a schematic view showing an operation example of the server and the client at the time of synchronization;
FIG. 43 is a block diagram when selecting partial synchronizing data from preference information, habit information, sensor information, and current state information without performing the movement prediction, and synchronizing according to communication information; and
FIG. 44 is a block diagram when selecting the partial synchronizing data from the preference information, the habit information, the sensor information, and the current state information without performing the movement prediction and the communication optimization, and then synchronizing.

### DETAILED DESCRIPTION OF THE EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The description will be made in the following order.
1. First embodiment (partial synchronization based on sensor information)
2. Second embodiment (partial synchronization based on preference and habit information)
3. Third embodiment (partial synchronization based on activity schedule)
4. Fourth embodiment (partial synchronization based on communication information and movement prediction)

### <1. First embodiment>

### (1) Configuration and concept of system

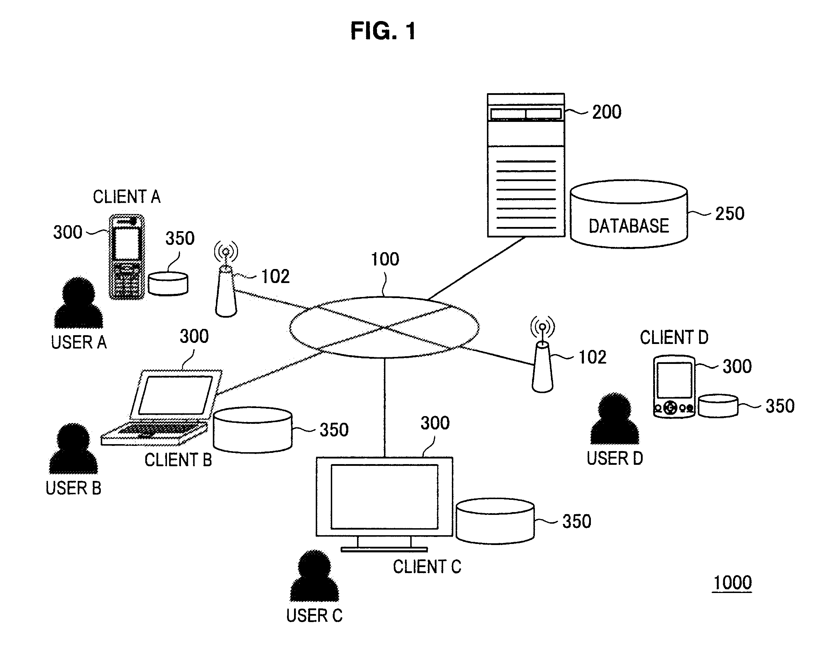

FIG. 1 is a schematic view showing a concept of a system 1000 according to the embodiments of the present invention. The system connects a server 200 and a client terminal 300 through a communication network 100 such as the Internet. A line to connect to the network 100 may be either a wireless communication such as WiFi, W-CDMA, LTE and WiMAX, or a wired communication such as optical fiber and ADSL. In the case of the wireless communication, the communication network 100 and the client 300 are connected through an access point 102. The server 200 holds all data of a plurality of users. The client 300 synchronizes with the server 200, and saves the necessary data in a database 350 (hard disc, etc.) provided in the client 300. Since all data are saved in the server 200, the user can check his/her own data regardless of from which client 300 the user logs in. As shown in FIG. 1, the server 200 includes a database 250 storing the data. The client 300 also includes the database 350. The server 200 and the database 250 may be configured integrally or as separate bodies. Similarly, the client 300 and the database 350 may be configured integrally or as separate bodies.

### (2) Block configuration of server and client

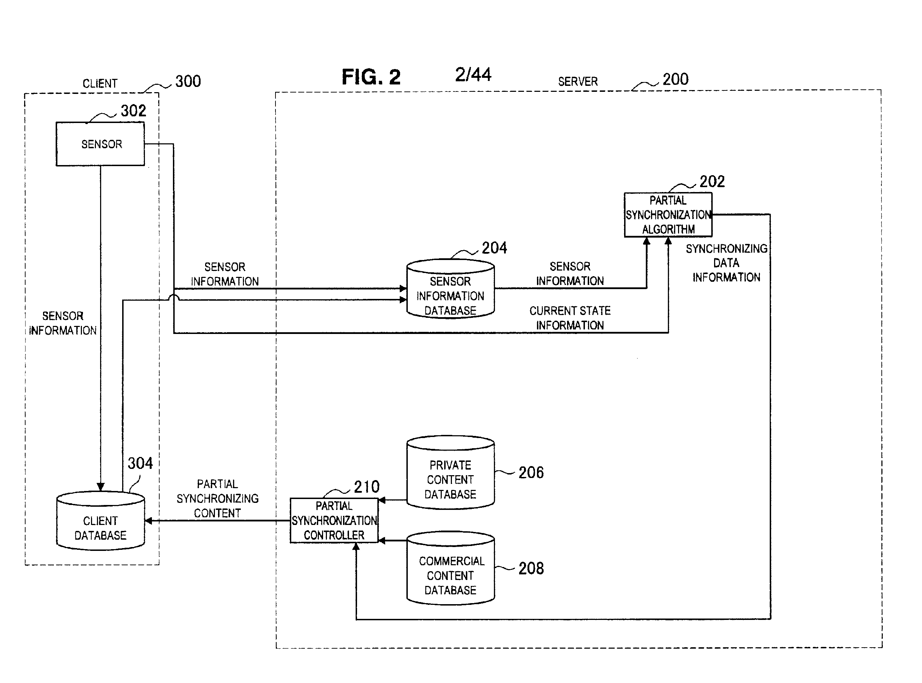

FIG. 2 is a block diagram showing a functional configuration of the server 200 and the client 300. As shown in FIG. 2, the server 200 includes a partial synchronization algorithm 202, a sensor information database 204, a private content database 206, a commercial content database 208, and a partial synchronization controller 210.

The partial synchronization algorithm 202 selects data to be synchronized based on sensor information received from the client 300, and transmits synchronizing data information indicating the data to be synchronized to the partial synchronization controller 210. The sensor information database 204 stores the sensor information received from the client 300. The private content database 206 is a database for storing content information such as schedule, agenda, electronic mail, web clip, address book, advertisement, and coupon of the user. The commercial content database 208 is a database for storing information such as movie and music viewed and listened by the user. The sensor information database 204, the private content database 206, the commercial content database 208 may all be configured by the database 250.

The partial synchronization controller 210 extracts a content corresponding to the information to be synchronized from the private content database 206 and the commercial content database 208 based on the synchronizing data information, and transmits the same to the client 300.

As shown in FIG. 2, the client 300 includes a sensor 302 and a client database 304. The sensor 302 is a sensor for detecting time information, place information (position information), operation information of the user, video information, audio information, pressure information, smell information, temperature information, humidity information, biological information, purchase information of articles and the like by the user, and the like. The information detected by the sensor 302 is transmitted to the server 200. The sensor information detected by the sensor 302 is directly transmitted to the server 200, or is transmitted from the client database 304 to the server 200 after being stored in the client database 304. The client database 304 is a database for storing data of the content transmitted from the server 200. The client database 304 may be configured by the database 350.

Each function block shown in Fig. 2 may be configured by hardware (circuit), or processing units (CPU) and software (program) for functioning the same. If a function block is configured by a processing unit and software, the program may be stored in a memory of the server 200 or the client 300, or a recording medium such as a memory to be inserted from the outside.

The time information is information such as year, date, and hour, minute, and seconds, obtained by measuring the time with the functions including a stopwatch function and a timer function. The place information (position information) is, for example, information for specifying a place obtained from position information such as GPS, communication line information such as WiFi and portable telephone, and card information such as FeliCa. The operation information is information obtained by measuring acceleration and operation change from a gyro sensor, an ultrasonic sensor, an electromagnetic sensor, an infrared ray sensor, a muscle potential sensor and the like.

The video information is, for example, information obtained by photographing a moving image or a still image with a camera. The audio information is, for example, information obtained by converting sound to an electrical signal with a microphone. The pressure information is, for example, information obtained by measuring change in pressure using an electrostatic capacity pressure sensor, a piezo pressure sensor, a magnetic body pressure sensor, or the like. The smell information is, for example, information measured using a sensor capable of identifying the smell. The temperature information is, for example, information obtained by measuring degree of cold and warm of atmosphere, object, human body, and the like with a temperature sensor. The humidity information is, for example, information obtained by measuring amount of water vapor in atmosphere, object, human body, and the like. The biological information is, for example, information related to reaction and state of a living body such as animals and plants obtained through measurement using an ultrasonic sensor, an electromagnetic sensor, an infrared ray sensor, a muscle potential sensor, an X-ray sensor, a brain wave sensor or the like. The purchase information is information obtained by detecting purchase of articles by the user using an IC card, a credit card, a cash card, a receipt scanner or the like.

When the data extracted by the partial synchronization controller 210 is sent to the client 300, the client 300 partially synchronizes the sent data with its client database 304. Thus, instead of transmitting all data related to the logged-in user from the server 200 to the client 300, only the data desired in the client 300 is synchronized (partially synchronized) with the client database 304 based on the sensor information. The partial synchronization is a process of automatically selecting a part of a data group stored or managed in the database of the server 200 and copying the same to the client database 304 based on the sensor information. The time for synchronization is thus greatly reduced. In the client 300, it is not necessary to accumulate all data related to the logged-in user accumulated in the server 200, and hence the capacity of the database 350 of the client 300 can be suppressed to a minimum. The capacity of the database 350 of the client 300 is thus substantially smaller than the capacity of the database 250 of the server 200. Therefore, according to the present embodiment, off-line viewing is realized after synchronization while realizing miniaturization of the database 350 of the client 300 and higher speed in the synchronization process. The data for partial synchronization can be automatically generated using the data extracted by the sensor 302.

In performing partial synchronization, the partial synchronization controller 210 may select the data to synchronize by giving priority for synchronization and considering the remaining amount of the database 350 of the client 300 and the capacity of the data to partially synchronize, and partially synchronize according to the priority.

### (3) Concept of transmission and reception of data between server and client

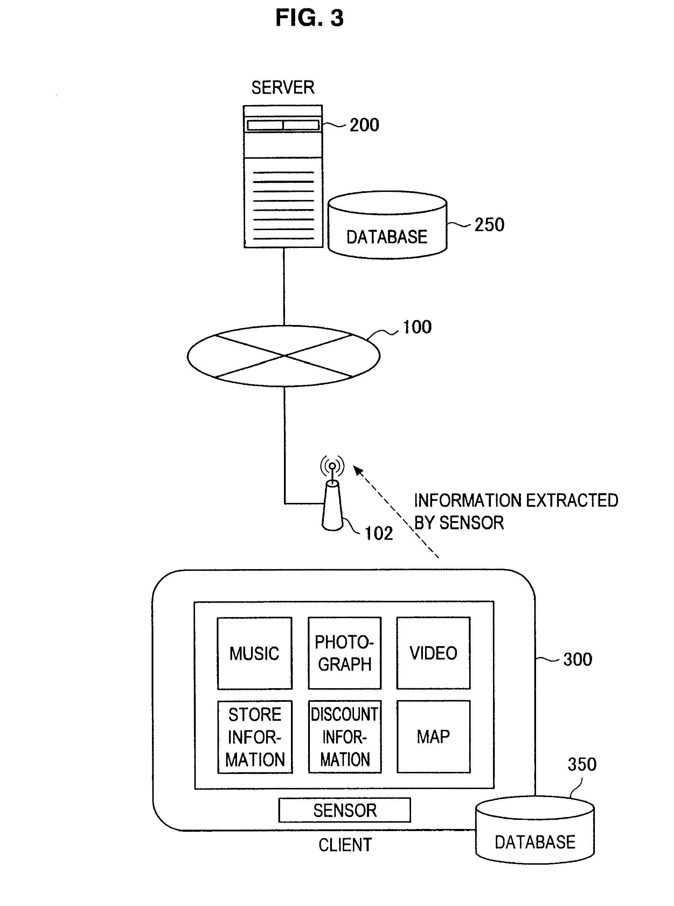

The concept of transmission and reception of data between the server 200 and the client 300 will now be described based on FIGS. 3, 4 and 5. As shown in FIG. 3, when the user logs in to the client 300, various types of information described above are detected by the sensor 302 of the client 300, and the client 300 transmits the information detected by the sensor 302 to the server 200. The server 200 automatically selects a part of a data group stored or managed in the database 250 of the server 200 using the sensor information received from the client 300.

The method of selecting is selected such that the data information (metadata) of all data saved in the server 200 accords according to the received time information, place information, operation information, video information, audio information, pressure information, smell information, temperature information, humidity information, biological information, and purchase information.

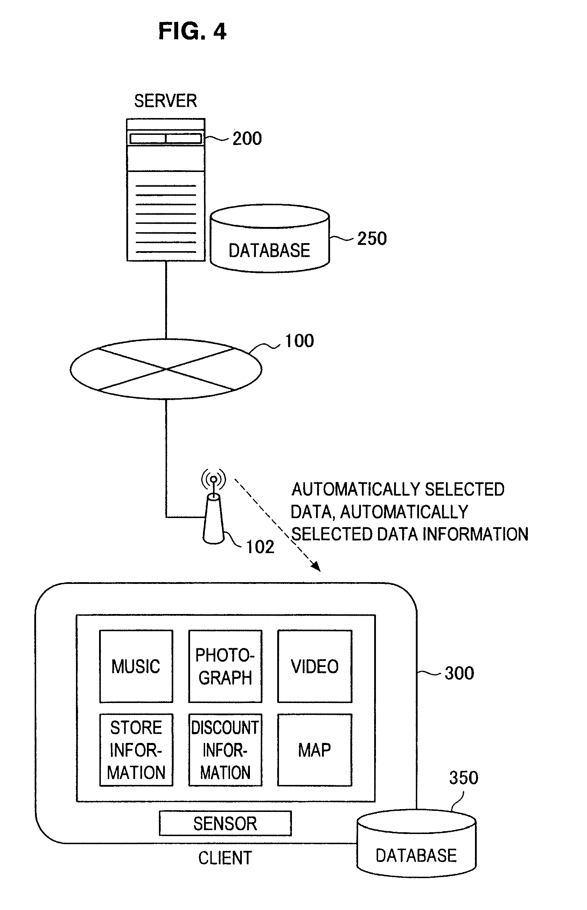

As shown in FIG. 4, the server 200 transmits the selected data to the client 300. The data selected by the server 200 may all be transmitted to the client 300, but only the difference with the data currently being held by the client 300 may be transmitted. Regarding the detection (selection) of the difference, since the server 200 knows all the data held by the client 300 if the server 200 constantly manages the data of the client 300, the difference may be detected in the server 200 and transmitted to the client 300. Alternatively, the server 200 may detect the difference by acquiring a list of data currently being held by the client 300 from the client 300. The difference data is selected by a difference data selection part arranged in the partial synchronization controller 210.

The server 200 transmits all selected data to be synchronized or the difference data to the client 300. The client 300 receives the data, and receives only the data corresponding to the sensor information such as time information, place information, operation information, video information, audio information, pressure information, smell information, temperature information, humidity information, biological information, and purchase information from the enormous database 250 of the server 200. Therefore, the database 350 of the client 300 can synchronize with only a part of the optimum data corresponding to the sensor information of the data stored in the database 250 of the server 200. However, the data information of all data (list of all data) that the user may use, which is saved in the server 200, may all be synchronized with (copied to) the client 300.

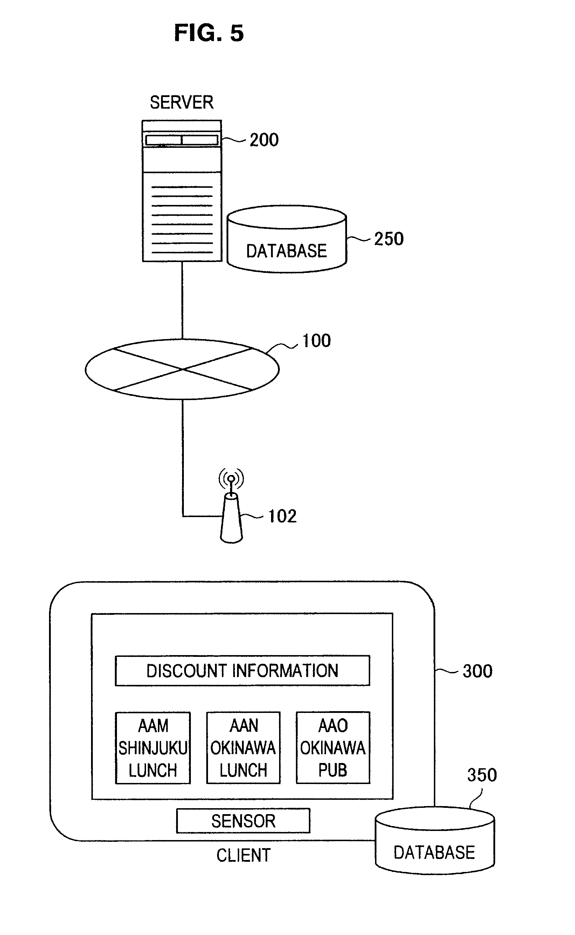

FIG. 5 shows a state in which the client 300 synchronizes the data of the database 350 with the data received from the server 200. In FIG. 5, the user can look at the list of all data, but the actually synchronized data is only the data of a part having a high possibility of being viewed received based on the sensor information among the data saved in the client 300. Thus, only the data desired for the current user state (state corresponding to time information, place information, operation information, video information, audio information, pressure information, smell information, temperature information, humidity information, biological information, purchase information, etc.) is automatically synchronized with (copied to) the database 350. The necessary data is data desired in the future and is data predicted based on the sensor information. If the data is synchronized with the client 300 before the time point the data is necessary, the data can be used and viewed at the client 300 even when the client 300 is in the off-line state thereafter.

### (4) Examples of data synchronization of server and client

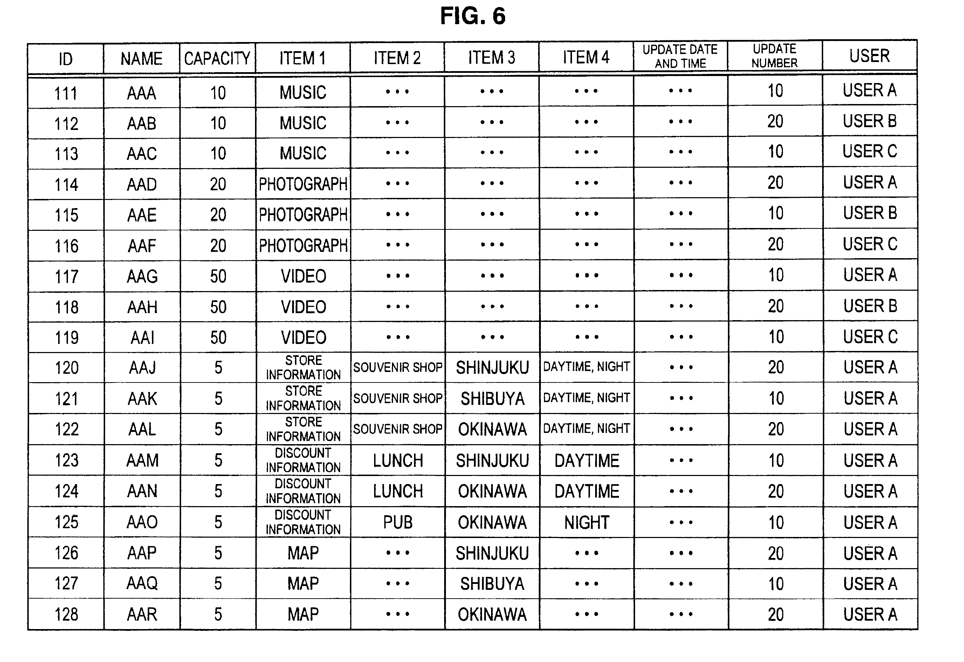

FIGS. 6, 7, 8 and 9 are schematic views showing examples where the database 250 of the server 200 and the database 350 of the client 300 are synchronized.

FIG. 6 is a schematic view showing all data saved in the server 200. As shown in FIG. 6, a unique ID is given to each data, and information such as name of data, capacity, type of data (items 1 to 4), update date and time, update number, corresponding user, and the like are given.

Here, assume that a user A logs in at Okinawa at 10 a.m. using a certain portable terminal (client terminal 300). The server 200 selects the necessary data from all data using the sensor information (time information, place information, operation information, video information, audio information, pressure information, smell information, temperature information, humidity information, biological information, purchase information, etc.) sent from the client terminal 300.

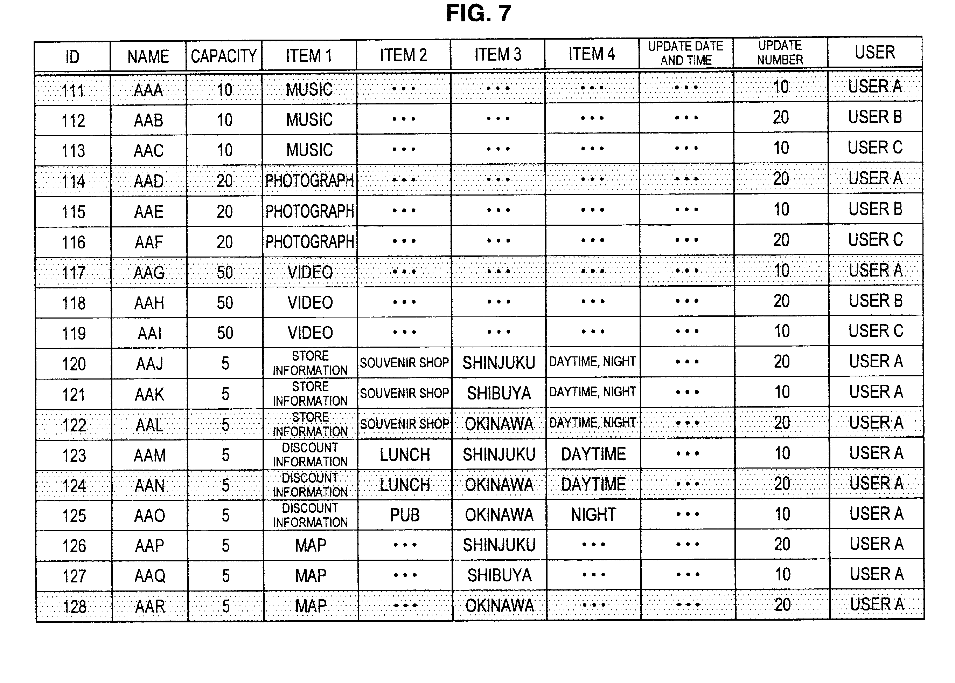

FIG. 7 shows a state where a part of the data shown in FIG. 6 is selected based on the sensor information sent from the client 300. In FIG. 7, the data with dots is the selected data. As shown in FIG. 7, the data that accords with the sensor information is selected from the data of the user A of the data of FIG. 6.

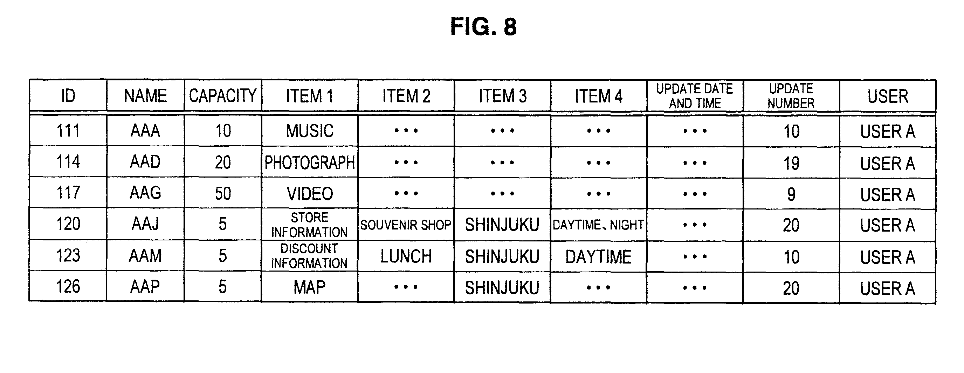

FIG. 8 shows data that the client 300 originally saved in the database 350 before synchronization. When transmitting data based on the difference as described above, the difference between the data shown in FIG. 8 and the data selected in FIG. 7 is detected, and the difference data (differing data) is transmitted from the server 200 to the client 300.

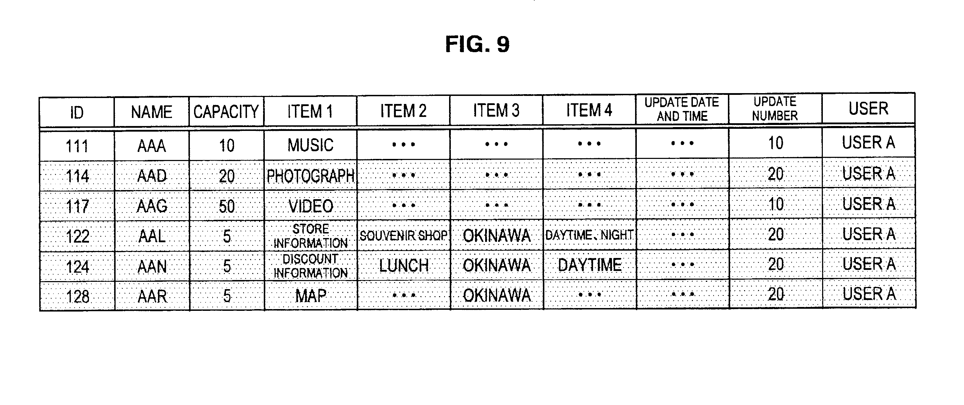

FIG. 9 shows a state of the synchronized database 350 of the client 300. The difference is detected in view of the update time and the update number in addition to the name of the data. The data to be synchronized is selected also in view of the capacity of the data. In the example described above, the place (item 3) is "Okinawa" based on the data information (metadata) as the time is morning and the place is Okinawa, and assuming that the data is used therefrom, the information that accords with "daytime" of time (item 4) are synchronized with the client 300. Therefore, in FIG. 9, information such as map, souvenir shop and lunch in Okinawa is copied to the database 350 of the client 300. All data selected in FIG. 7 may be synchronized with the database 350 of the client 300 without detecting the difference.

### (5) Processing procedure in present embodiment

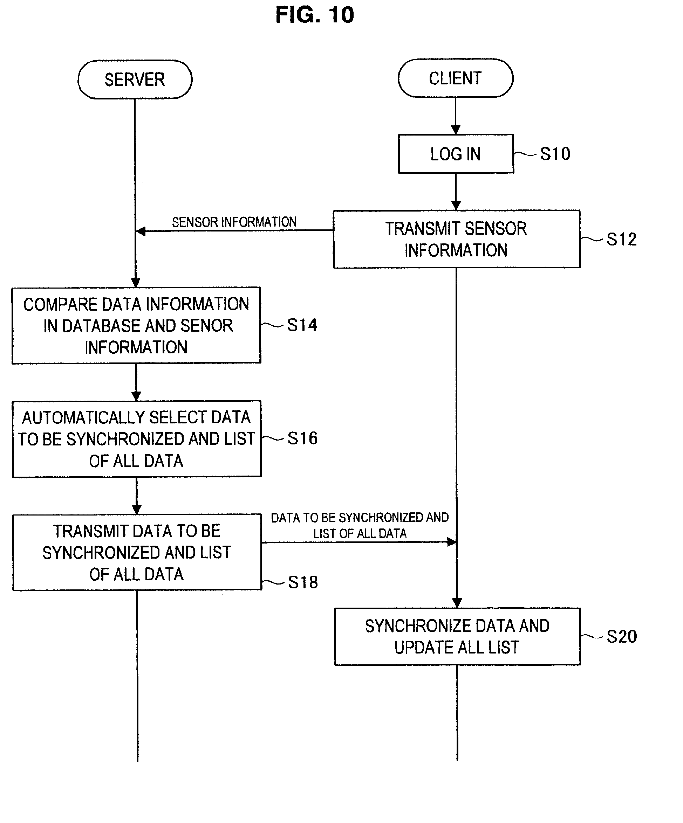

The procedure of the process in the present embodiment will now be described based on the flowcharts of FIGS. 10, 11 and 12.

FIG. 10 is a flowchart showing a typical process of the present embodiment. First, when the user logs in to the client 300 (step S10), the client 300 transmits the sensor information to the server 200 along with the ID for identifying the user (step S 12). The server 200 compares the data of the database 250 and the sensor information (step S14). The server 200 automatically selects the data to be synchronized and the list of all data of the user who logged in using the sensor information (step S16). The server 200 transmits the selected data to be synchronized and the list of all data to the client 300 (step S18). The client 300 receives the data transmitted from the server 200, and the database 350 synchronizes with a part of the data selected by the server 200 (step S20). The client 300 then updates the list of all data held by the client 300 (step S20).

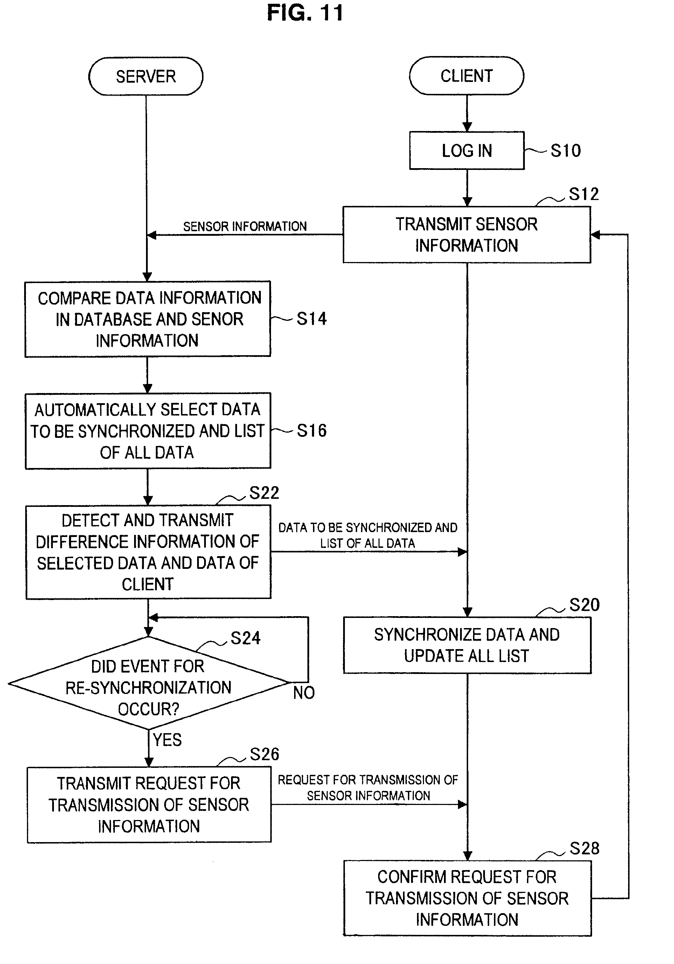

FIG. 11 is a flowchart showing a process of detecting the difference between the data selected on the server 200 side and the data of the client 300, receiving the difference data from the server and synchronizing (updating) in FIG. 10. FIG. 11 also shows an example of performing a task of automatically re-synchronizing a part of the database 350 at every certain event. In FIG. 11, the processes of steps S 10, S12, S14, S16 and S20 are similar to those of FIG. 10.

The server 200 manages the data synchronized with the client 300 in the past to manage which data the client 300 is currently holding, thereby being aware of the data currently held by the client 300. Therefore, in step S22, the difference between the selected data to be synchronized and the data currently held by the client 300 is detected, and only the difference data is transmitted.

Since the sensor information changes by the minute, whether or not an event for re-synchronization such as a certain time period, presence of operation of the client 300 by the user, change in the sensor information or the like occurred is detected in step S24. If the event for re-synchronization occurred, the server transmits a request for transmission of the sensor information to the client 300 (step S26).

After checking the request for transmission of the sensor information (step S28), the client 300 returns to step S12, and re-transmits the sensor information.

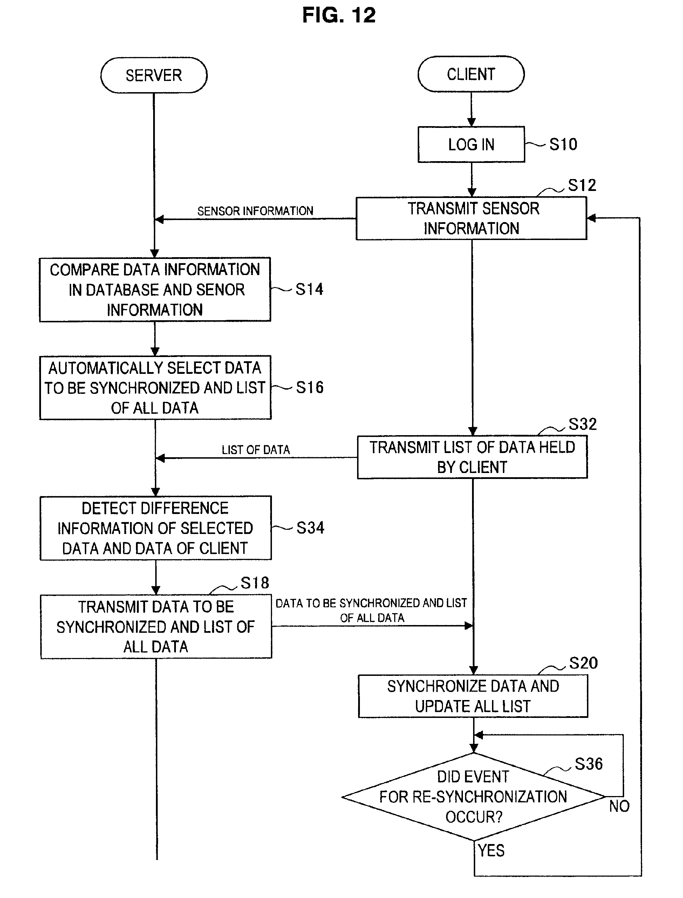

FIG. 12 is a flowchart showing an example in which the client 300 transmits the currently holding data to the server 200 in FIG. 11. In FIG. 12, the processes of steps S 10, S12, S14, S15, S18, and S20 are similar to those of FIG. 10.

In the example of FIG. 12, the client 300 transmits a list of data currently being held in the database 350 to the server 200 (step S32). The server 200 detects the difference between the selected data to be synchronized and the data currently being held by the client 300 (step S34). The data to be synchronized obtained based on the difference and the list of all data are transmitted to the client 300.

In the example of FIG. 12, whether or not the event for re-synchronization occurred is determined on the client 300 side (step 36), where the process returns to step S12 to re-transmit the sensor information if the event for re-synchronization occurred.

According to the first embodiment described above, only the necessary data is selected by the server 200 based on the sensor information, and the database 350 of the client 300 is synchronized by the selected data. Therefore, the amount of data to transmit from the server 200 can be suppressed to a minimum, and the time for synchronization can be greatly reduced. In addition, since the database 350 of the client 300 need not hold all data of the server 200, the capacity of the database 350 can be suppressed to a minimum.

### <2. Second embodiment>

A second embodiment of the present invention will now be described. A configuration of a system according to the second embodiment is similar to that according to the first embodiment shown in FIG. 1. While the data of the server 200 is selected based on the sensor information in the first embodiment, the data is selected based on preference data and habit data of the user in the second embodiment.

### (1) Block configuration of server and client

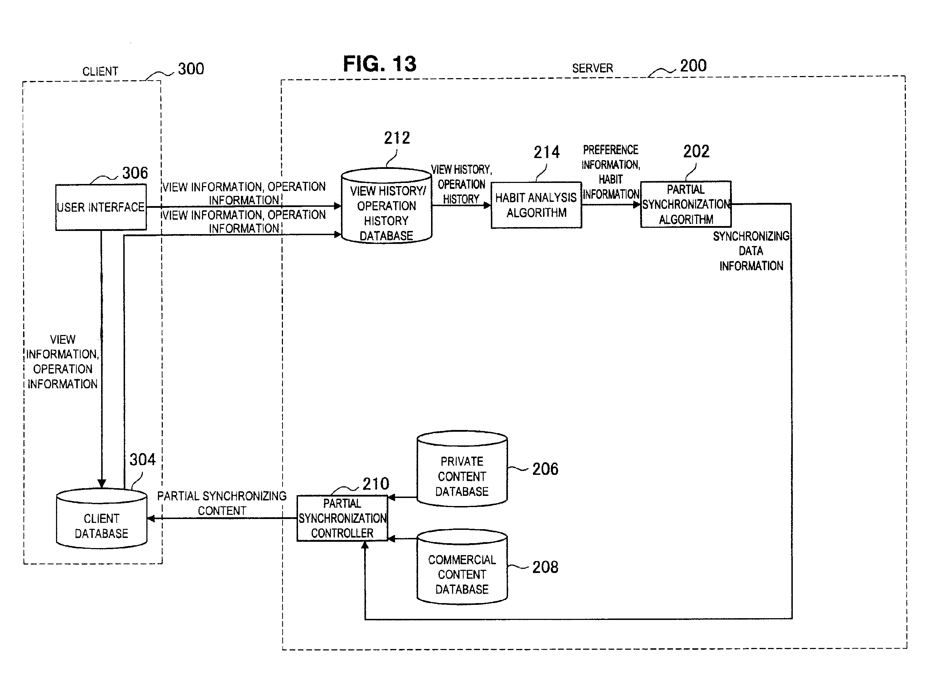

FIG. 13 is a block diagram showing a functional configuration of the server 200 and the client 300. As shown in FIG. 13, the server 200 includes the partial synchronization algorithm 202, the private content database 206, and the commercial content database 208. The server 210 also includes the partial synchronization controller 210, a view history/operation history database 212, and a habit analysis algorithm 214. In FIG. 13, the configurations of the partial synchronization algorithm 202, the private content database 206, the commercial content database 208, and the partial synchronization controller 210 are similar to those of the first embodiment.

The view history/operation history database 212 stores the view information and the operation information by the user transmitted from a user interface 306 of the client 300, and transmits the view history/operation history of the user to the habit analysis algorithm 214. The habit analysis algorithm 214 is an algorithm for analyzing the habit of the user based on the view history/operation history transmitted from the client 300. The preference information and the habit information of the user are generated through analysis in the habit analysis algorithm 214, which are then transmitted to the partial synchronization algorithm 202. The partial synchronization algorithm 202 generates the synchronizing data information based on the preference information and the habit information, and transmits the same to the partial synchronization controller 210.

The partial synchronization controller 210 extracts the content to be synchronized corresponding to the preference information and the habit information of the user from the private content database 206 and the commercial content database 208 using the synchronizing data information, and transmits the same to the client 300.

As shown in FIG. 13, the client 300 includes the user interface 306 and the client database 304. The user interface 306 transmits information such as the view information, the operation information, and the user ID to the server 200. The information (view information, operation information) acquired by the user interface 306 are transmitted directly to the server 200, or stored in the client database 304 and then transmitted from the client database 304 to the server 200. The client database 304 is a database for storing data of the content sent from the server 200. The client database 304 can be configured by the database 350.

When the data extracted by the partial synchronization controller 210 is sent to the client 300, the client 300 partially synchronizes the sent data with its client database 304. Thus, instead of transmitting all data related to the logged-in user from the server 200 to the client 300, only the data desired in the client 300 is synchronized (partially synchronized) in the client database 304 based on the sensor information. Therefore, off-line viewing is realized after synchronization while realizing miniaturization of the database 350 of the client 300 and higher speed in the synchronization process. Even the preference not input by the user can be addressed by automatically generating the preference information from the view history/operation history without receiving the preference data from the client.

The view history refers to, for example, the user information, the time information, and the place information indicating the history of viewing television, recorded program, video, music, web site, electronic book, electronic dictionary, electronic map, photograph, moving image, e-mail, notepad, document, account book, address book, agenda and the like.

The operation history refers to, for example, the user information, the time information, and the place information indicating the history of operating television, recorded program, video, music, web site, electronic book, electronic dictionary, electronic map, photograph, moving image, e-mail, notepad, document, account book, address book, agenda and the like.

The purchase history refers to, for example, the user information, the time information, the place information, and the price information related to the purchase on the network such as the website and the purchase in real world extracted by the sensor.

The activity history refers to, for example, the user information, the time information, the place information, and the operation information related to the activity on the network such as the website and the activity in real world extracted by the sensor.

The agenda refers to, for example, data described with the future time information, place information, view information, operation information, purchase information, and activity information.

The e-mail is data in which the future time information, place information, view information, operation information, purchase information, and activity information are transmitted and received. The notepad is data in which the future time information, place information, view information, operation information, purchase information, and activity information are noted.

### (2) Transmission and reception of data between server and client

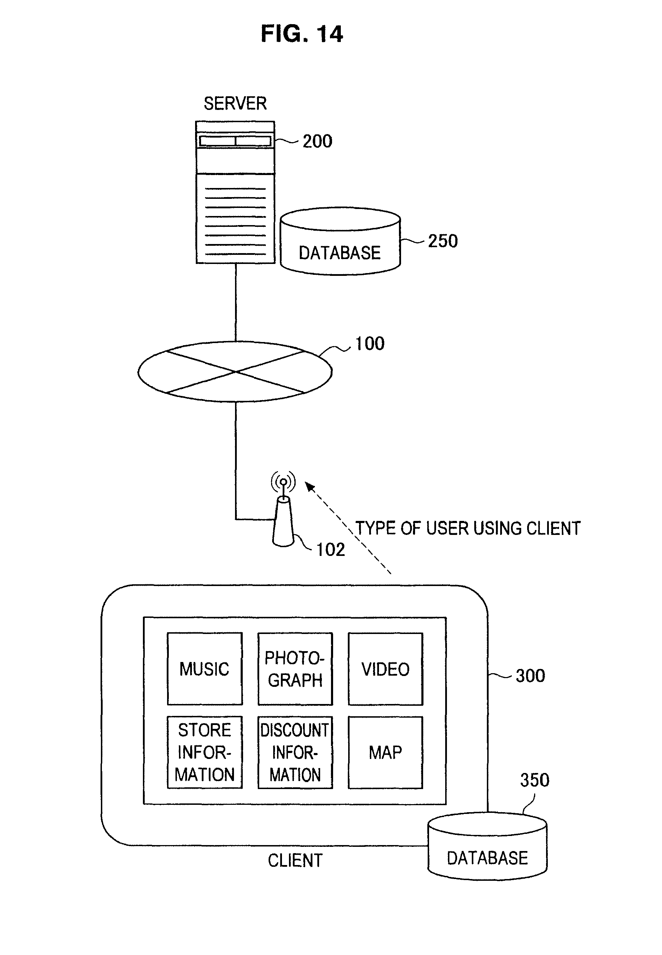

FIGS. 14, 15 and 16 are schematic views showing the concept of transmission and reception between the server 200 and the client 300 in the second embodiment. As shown in FIG. 14, when the user logs in to the client 300, the client 300 transmits information (user ID) on the type of user who logged in to the server 200. The server 200 automatically selects a part of the data group stored or managed in the database 250 of the server 200 using the information on the type of user received from the client 300.

The method of selecting may include saving the history such as the view history, the operation history, the purchase history, and the activity history of each user in advance on the server 200 side, analyzing the preference data and the habit data of an individual or a group from the saved data, and selecting using the result. In the selection of the partial synchronizing data by the preference data and the habit data, the selection can be made based not only on the preference and habit data of the user himself/herself but also on the preference and habit data of a group including other users. For instance, the preference data that the user likes rock music can be created by analyzing the view history of a song by artist A. Therefore, if it is determined that the music tempo is rock music as a result of analyzing the music tempo for the song by artist B, this matches as preference and thus can be selected even if the view history on the song by the artist B does not exist. Similarly to the first embodiment, the server 200 may transmit all selected data to the client 300, or may transmit only the difference with the data currently being held by the client 300. Regarding the detection of the difference, the difference may be detected in the server 200 and sent to the client 300 since the server 200 is aware of all the data held by the client 300 if the server 200 constantly manages the data of the client 300. The server 200 may detect the difference by acquiring the list of data currently being held by the client 300 from the client 300.

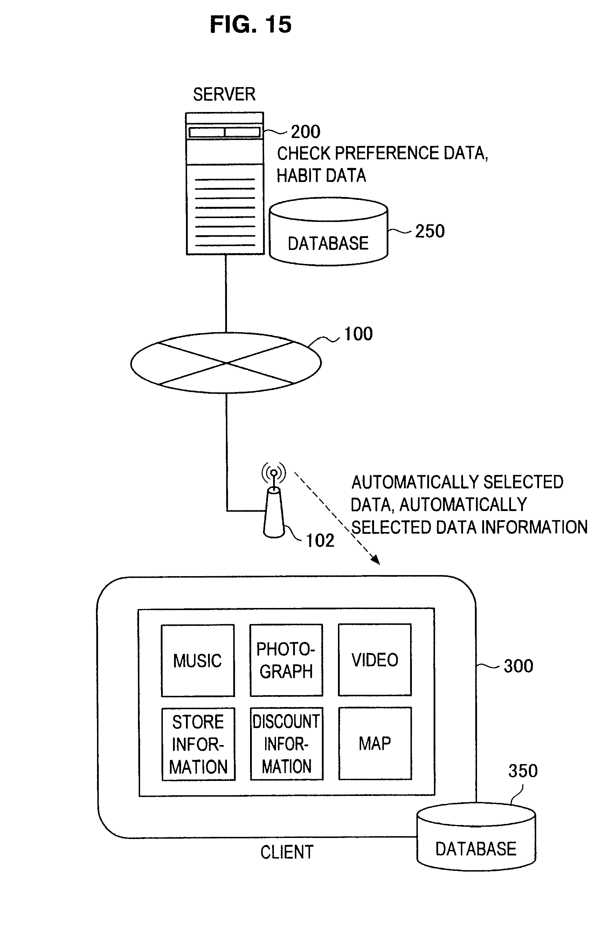

As shown in FIG. 15, the server 200 transmits all selected data to be synchronized or the difference data to the client 300. The client 300 receives the data and performs synchronization of the database 350 with the received data. With this, the database 350 of the client 300 can synchronize with only a part of optimum data corresponding to the preference data and the habit data of the user among the enormous amount of data in the database 250 of the server 200. All of the data information (list of all data) of all data that are saved in the server 200 and that can be viewed by the user may be synchronized with (copied to) the client.

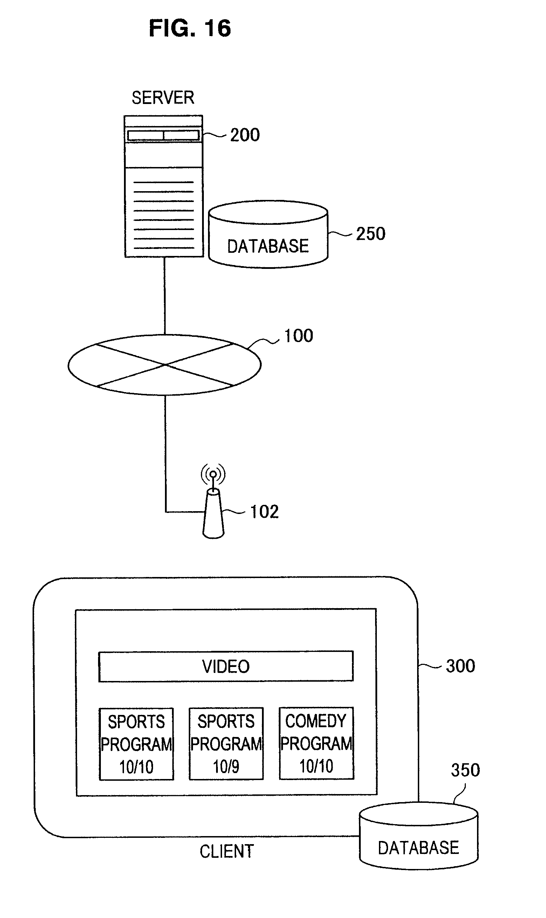

FIG. 16 shows a state after synchronization is completed. In FIG. 16, the user can look at the list of all data through the client 300, but the data actually synchronized and saved in the database 350 of the client 300 are only some data having a high possibility of being viewed. Thus, only the necessary data corresponding to the preference and the habit of the user are automatically copied to the database 350 of the client 300. The necessary data is data desired in the future and predicted based on the preference and the habit. If the client 300 acquires data from the server 200 and synchronizes the data with the database 350 of the client 300 before the time point the data is necessary, the data can be used and viewed even when the client 300 is in the off-line state thereafter.

### (3) Examples of data synchronization of server and client

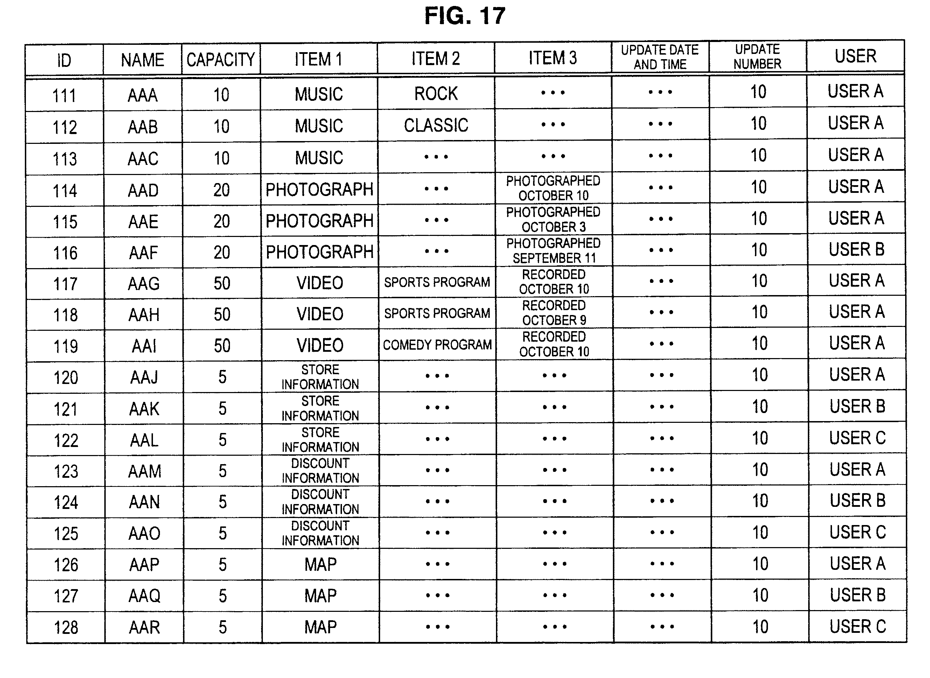

FIGS. 17, 18, 19 and 20 are schematic views showing examples where the database 250 of the server 200 and the database 350 of the client 300 are synchronized.

FIG. 17 is a schematic view showing all data saved in the server 200. Assume that the user A logged in to the client 300. The habit analysis algorithm 214 of the server 200 generates the preference information and the habit information of the user A based on the view history/operation history of the user A, and selects the data to be synchronized based on such information.

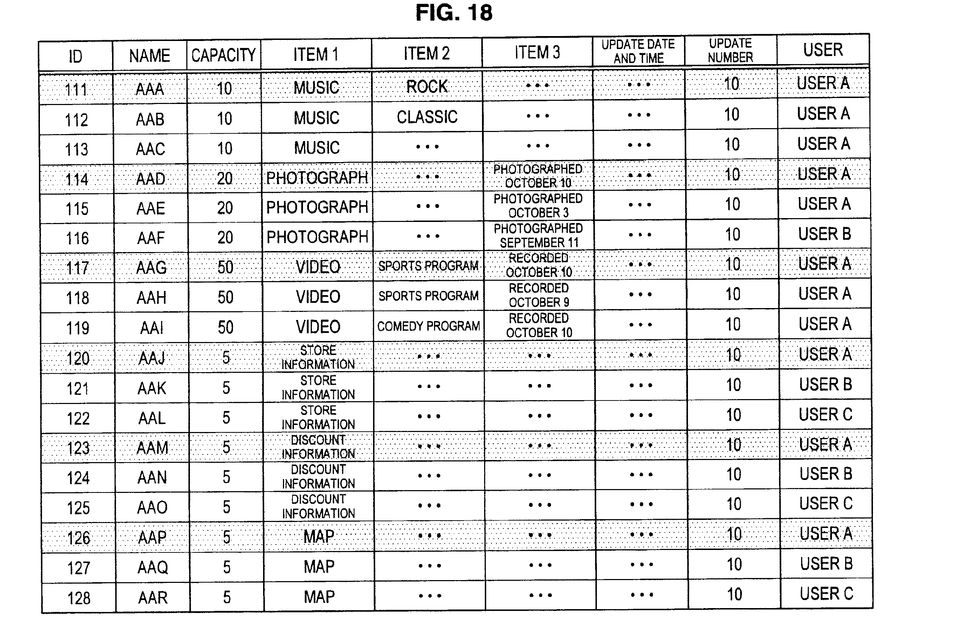

FIG. 18 shows a state where a part of the data shown in FIG. 17 is selected based on the preference information and the habit information. In FIG. 18, the data with dots is the selected data. As shown in FIG. 18, the data that accords with the preference information and the habit information is selected from the data of the user A among the data of FIG. 17.

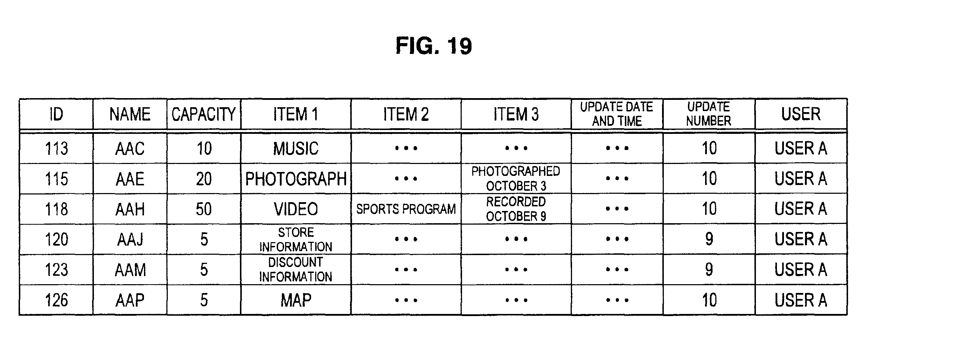

FIG. 19 shows data that the client 300 originally saved in the database 350 before synchronization. When transmitting data based on the difference described above, the difference between the data shown in FIG. 19 and the data selected in FIG. 18 is detected, and the difference data (differing data) is transmitted from the server 200 to the client 300.

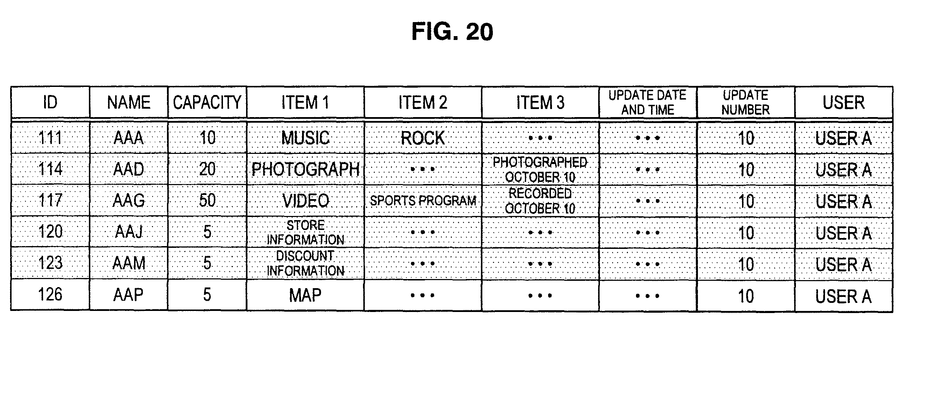

FIG. 20 shows a state of the synchronized database 350 of the client 300. Similarly to the first embodiment, the difference is detected taking into consideration not only the name of the data but also the update time and update number, and the data capacity. For instance, assume that the user A tends to listen to rock with the portable terminal at the time of commutation, tends to sometimes look at the photographs taken the previous day at the office, and tends to watch the sports program recorded the previous day in the car based on the preference information and the habit information. In this case, the data of rock, photograph, and sports program are selected according to the preference information and the habit information, as shown in FIG. 18, and such data are synchronized with (copied to) the database 350 of the client 300, as shown in FIG. 20.

### (4) Processing procedure in present embodiment

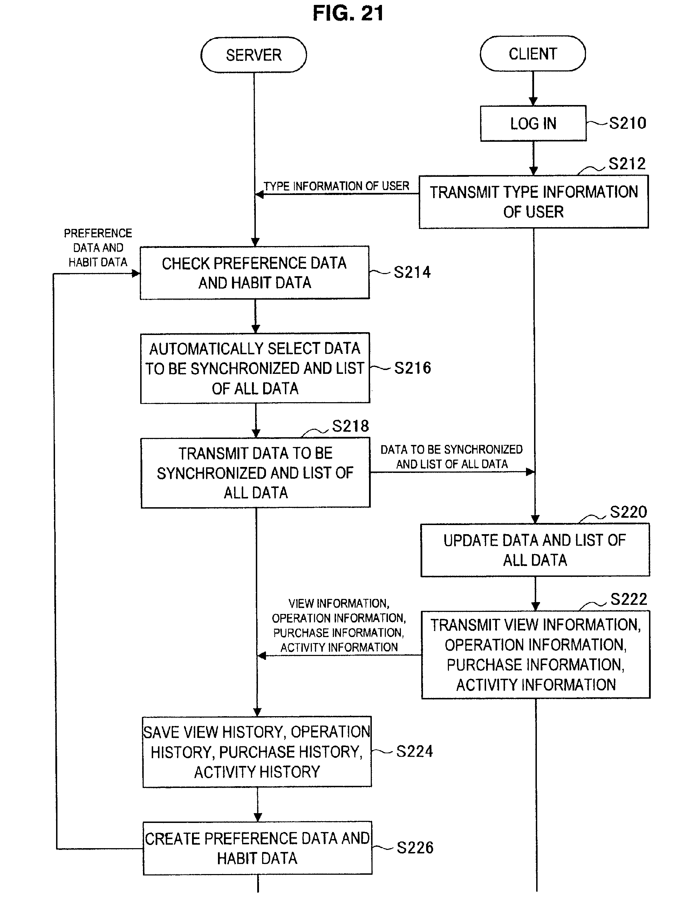

The procedure of the process in the present embodiment will now be described based on the flowcharts of FIGS. 21, 22 and 23.

FIG. 21 is a flowchart showing a typical process of the present embodiment. First, when the user logs in to the client 300 (step S210), the client 300 transmits the type information (user ID) of the user to the server 200 (step S212). The server 200 extracts the view history and the operation history from the database 212 using the user ID, and analyzes and checks the preference information and the habit information (step S214). The data to be synchronized and the list of all data of the logged-in user are automatically selected using the analyzed preference information and the habit information (step S216). The server 200 transmits the selected data to be synchronized and the list of all data to the client 300 (step S218). The client 300 receives the data transmitted from the server 200, and the database 350 synchronizes with a part of the data selected by the server 200, and the list of all data held by the client 300 is updated (step S220).

The client 300 transmits information such as view information, operation information, purchase information, and activity information to the server 200 (step S222). When receiving such information, the server 200 saves the view history, the operation history, the purchase history, the activity history, and the like in the database 212 (step S224). The server 200 then creates the preference information and the habit information by means of the habit analysis algorithm 214 (step S226).

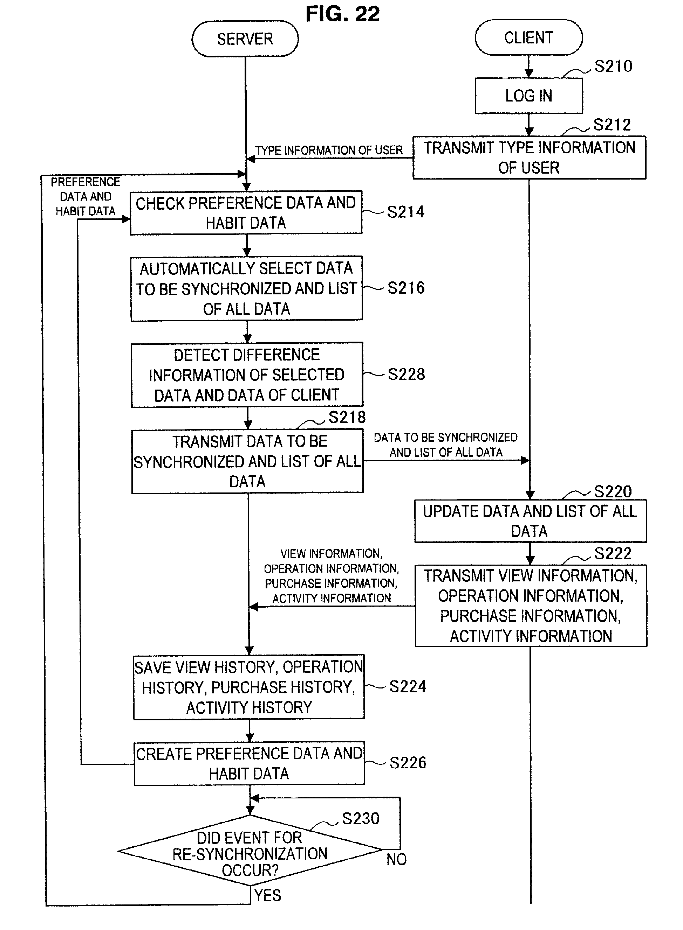

FIG. 22 is a flowchart showing a process of detecting the difference between the data selected on the server 200 side and the data of the client 300, receiving the difference data from the server and synchronizing (updating) in FIG. 21. FIG. 22 also shows an example of performing a task of automatically re-synchronizing a part of the database 350 at every certain event. In FIG. 22, the processes of steps S210, S212, S214, S216, S218, S220, S222, S224, and S226 are similar to those of FIG. 21.

The server 200 manages the data synchronized with the client 300 in the past to manage which data the client 300 is currently holding, thereby being aware of the data currently held by the client 300. Therefore, in step S228, the difference between the selected data to be synchronized and the data currently held by the client 300 is detected. The data to be synchronized obtained based on the difference and the list of all data are transmitted to the client 300 in step S218.

Since the preference data and the habit data changes by the minute, whether or not an event for re-synchronization such as a certain time period, operation of the client 300 by the user, change in the user environment and the like occurred is detected in step S230. If the event for re-synchronization occurred, the check on the preference information and the habit information is carried out again, and the data to be synchronized is selected using the most recent preference information and the habit information (step S214).

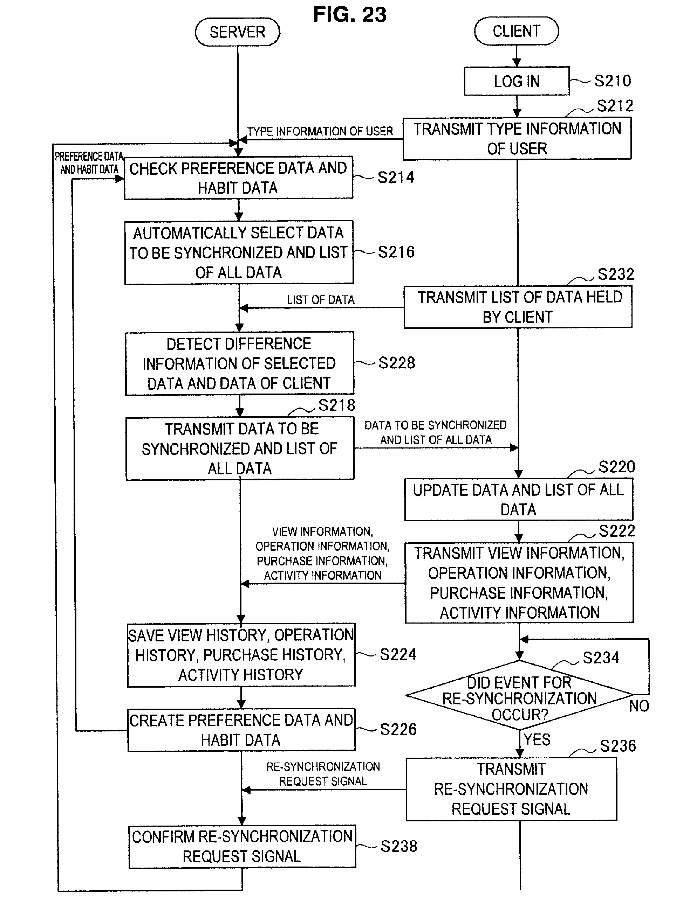

FIG. 23 is a flowchart showing an example in which the client 300 transmits the information for detecting the difference to the server 200 and the client 300 checks the occurrence of the event for re-synchronization in FIG. 22. In FIG. 23, the processes of steps S210, S212, S214, S216, S218, S220, S222, S224, S226, and S228 are similar to those of FIG. 21.

In the example of FIG. 23, the client 300 transmits a list of data currently being held in the database 350 to the server 200 (step S232). The server 200 detects the difference between the selected data to be synchronized and the data currently being held by the client 300 (step S228). Then, the data to be synchronized obtained based on the difference and the list of all data are transmitted to the client 300 (step S218).

In the example of FIG. 23, whether or not the event for re-synchronization occurred is determined on the client 300 side (step 234), where the process proceeds to step S236 to transmit a re-synchronization request signal to the server 200 if the event for re-synchronization occurred. The server 200 returns to step S214 when the server 200 confirms the re-synchronization request signal (step S238) and then performs the subsequent processes to perform re-synchronization.

According to the second embodiment described above, only the necessary data is selected by the server 200 based on the preference information and the habit information, and the database 350 of the client 300 is synchronized by the selected data. Therefore, the amount of data to transmit from the server 200 can be suppressed to a minimum, and the time for synchronization can be greatly reduced. In addition, since the database 350 of the client 300 need not hold all data of the server 200, the capacity of the database 350 can be suppressed to a minimum.

### <3. Third embodiment>

A third embodiment of the present invention will now be described. In the third embodiment, synchronization is carried out based on activity schedule data of the user.

### (1) Block configuration of server and client

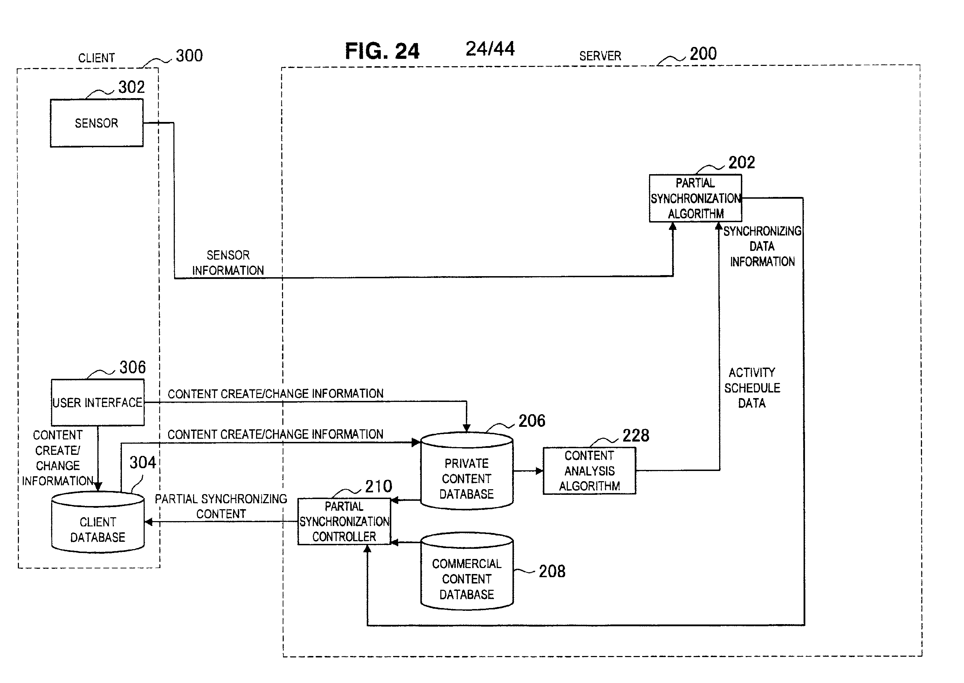

FIG. 24 is a block diagram showing a functional configuration of the server 200 and the client 300. As shown in FIG. 24, the server 200 includes the partial synchronization algorithm 202, the private content database 206, the commercial content database 208, the partial synchronization controller 210, and a content analysis algorithm 228.

The private content database 206 is a database for storing content information such as schedule, agenda, electronic mail, photograph, and private video of the user. The private content database 206 is updated according to the operation information sent from the user interface 306. The commercial content database 208 is a database for storing information such as movie and music viewed and listened by the user.

The server 200 analyzes the private content stored in the private content database 206 such as agenda and e-mail with the content analysis algorithm 226, generates activity schedule data indicating the activity schedule of the user, and sends the same to the partial synchronization algorithm 202. The content analysis algorithm 226 detects the future schedule (place, time, etc.) of the user described in the agenda and the e-mail, and creates the activity schedule data based thereon.

The partial synchronization algorithm 202 selects data to be synchronized based on activity schedule data, and transmits synchronizing data information indicating the data to be synchronized to the partial synchronization controller 210.

The partial synchronization controller 210 extracts a content corresponding to the information to be synchronized from the private content database 206 and the commercial content database 208 based on the synchronizing data information, and transmits the same to the client 300.

As shown in FIG. 24, the client 300 includes the user interface 306 and the client database 304. The user interface 306 transmits information such as the operation information by the user and the user ID to the server 200. The information (content create/change information) acquired in the user interface 306 are transmitted directly to the server 200, or stored in the client database 304 and then transmitted from the client database 304 to the server 200. The client database 304 is a database for storing data of the content sent from the server 200.

### (2) Transmission and reception of data between server and client

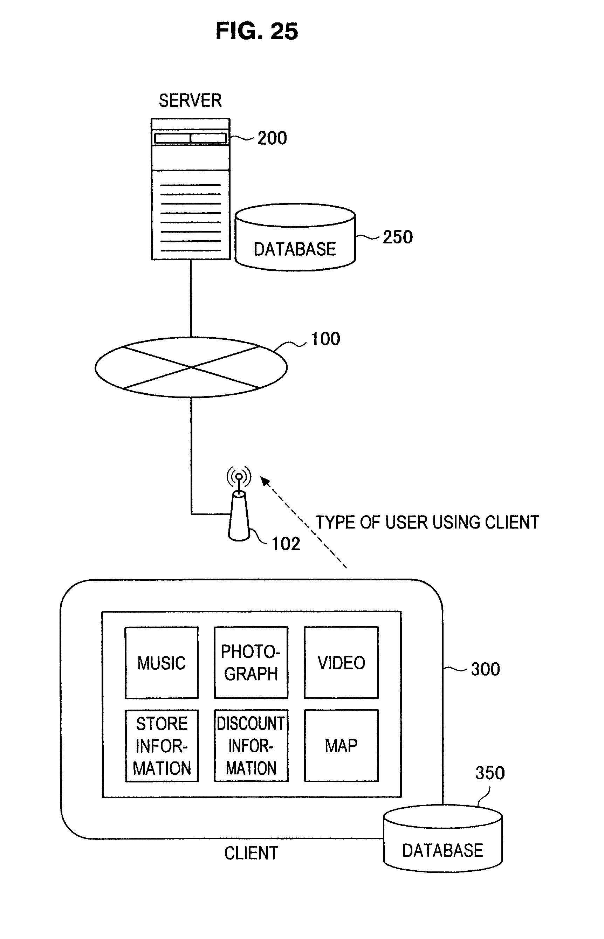

FIGS. 25, 26 and 27 are schematic views showing the concept of transmission and reception between the server 200 and the client 300 in the third embodiment. As shown in FIG. 25, when the user logs in to the client 300, the client 300 transmits information (user ID) on the type of user who logged in to the server 200. The server 200 automatically selects a part of the data group stored or managed in the database 250 of the server 200 using the information on the type of user received from the client 300.

The method of selecting may include creating future activity schedule data from the data recorded in relation to the future activity such as agenda, e-mail, and notepad of each user in advance on the server 200 side, and selecting using the result. Similarly to the first embodiment, the server 200 may transmit all selected data to the client 300 or may transmit only the difference with the data currently being held by the client 300.

Regarding the detection of the difference, the difference may be detected in the server 200 and sent to the client 300 since the server 200 is aware of all the data held by the client 300 if the server 200 constantly manages the data of the client 300. The server 200 may detect the difference by acquiring the list of data currently being held by the client 300 from the client 300.

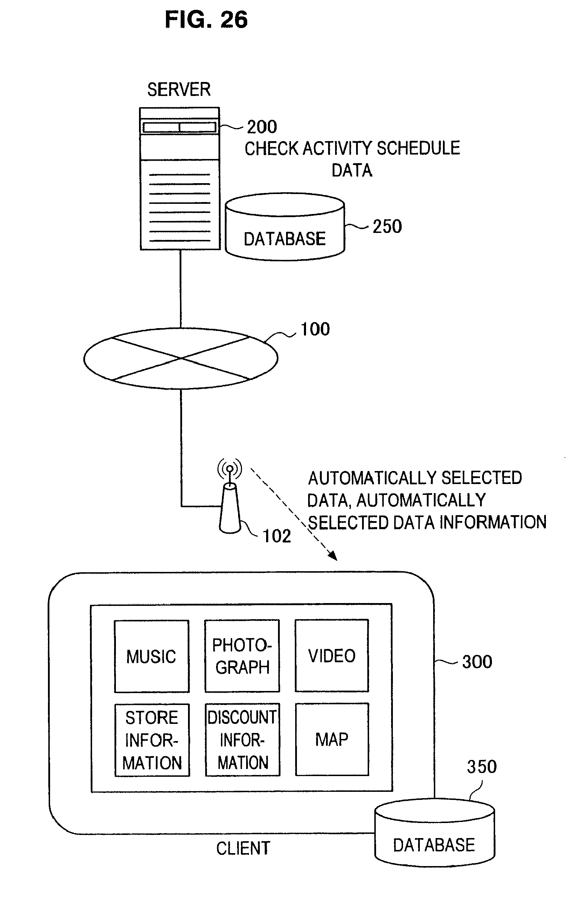

As shown in FIG. 26, the server 200 transmits all selected data to be synchronized or the difference data to the client 300. The client 300 receives the data and performs synchronization of the database 350 with the received data. With this, the database 350 of the client 300 can synchronize with only a part of optimum data corresponding to the activity schedule data of the user among the enormous amount of data in the database 250 of the server 200. All of the data information (list of all data) of all data that are saved in the server 200 and that can be viewed by the user may be synchronized with (copied to) the client.

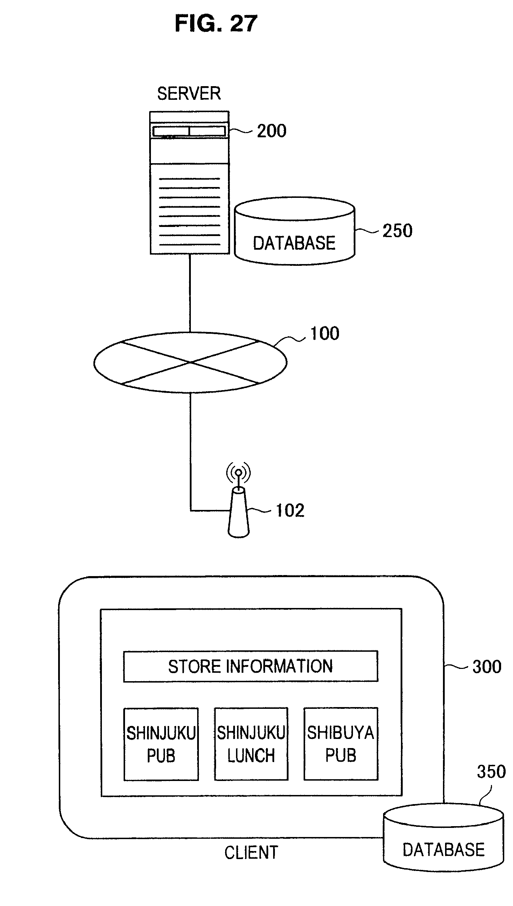

FIG. 27 shows a state after synchronization is completed. In FIG. 27, the user can look at the list of all data through the client 300, but the data actually synchronized and saved in the database 350 of the client 300 are only some data having a high possibility of being viewed. Thus, only the necessary data corresponding to the future activity of the user are automatically copied to the database 350 of the client 300.

### (3) Examples of data synchronization of server and client

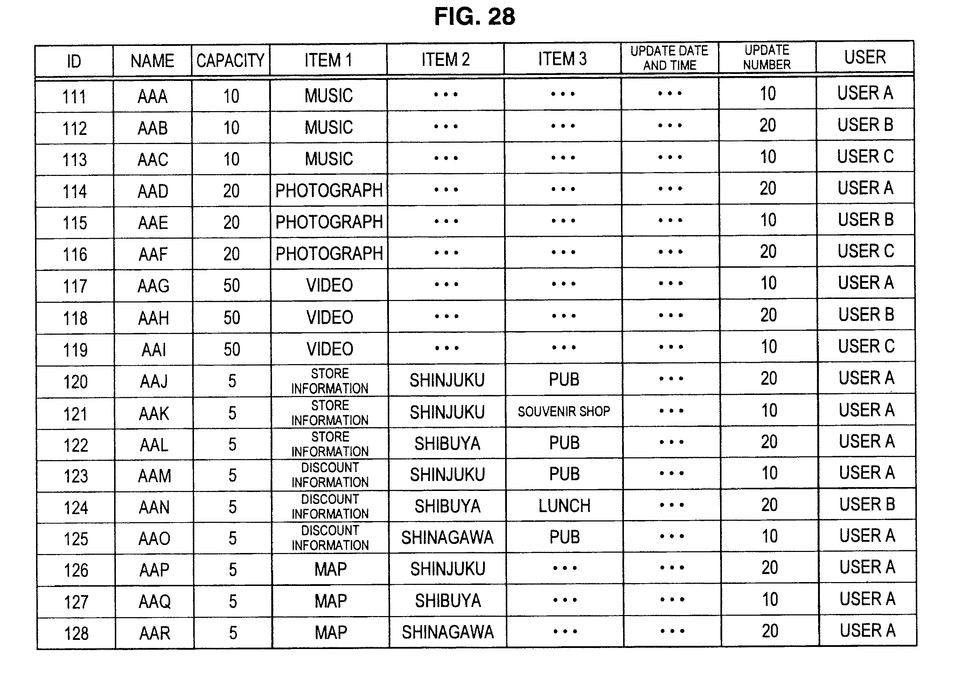

FIGS. 28, 29, 30 and 31 are schematic views showing examples where the database 250 of the server 200 and the database 350 of the client 300 are synchronized.

FIG. 28 is a schematic view showing all data saved in the server 200. Assume that the user A logged in to the client 300. The server 200 selects the data to be synchronized using the activity schedule data.

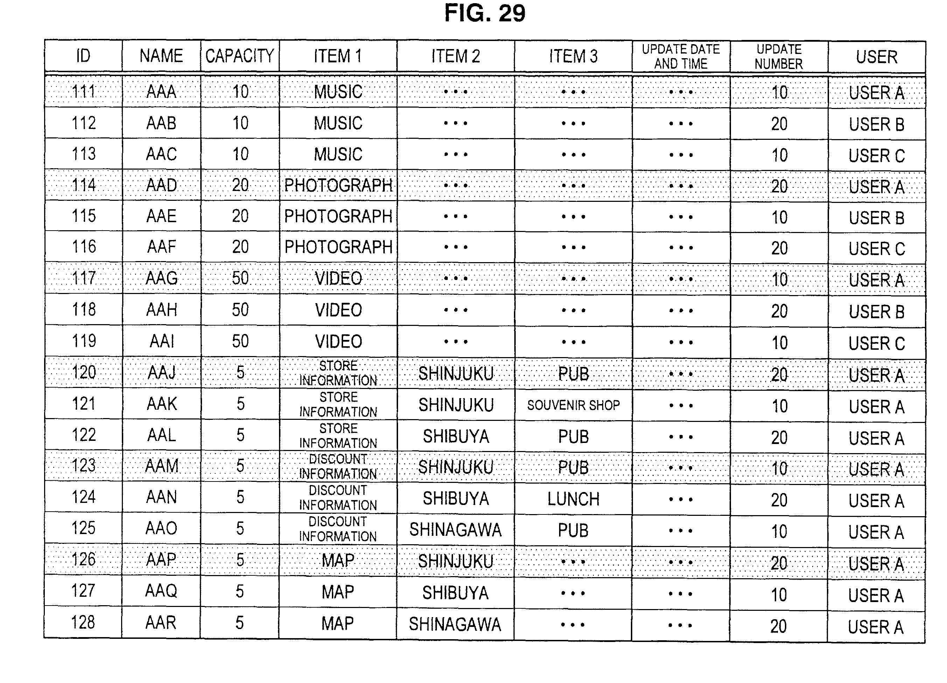

FIG. 29 shows a state where a part of the data shown in FIG. 28 is selected based on the activity schedule data. In FIG. 29, the data with dots is the selected data. As shown in FIG. 29, the data that accords with the activity schedule data is selected from the data of the user A among the data of FIG. 28.

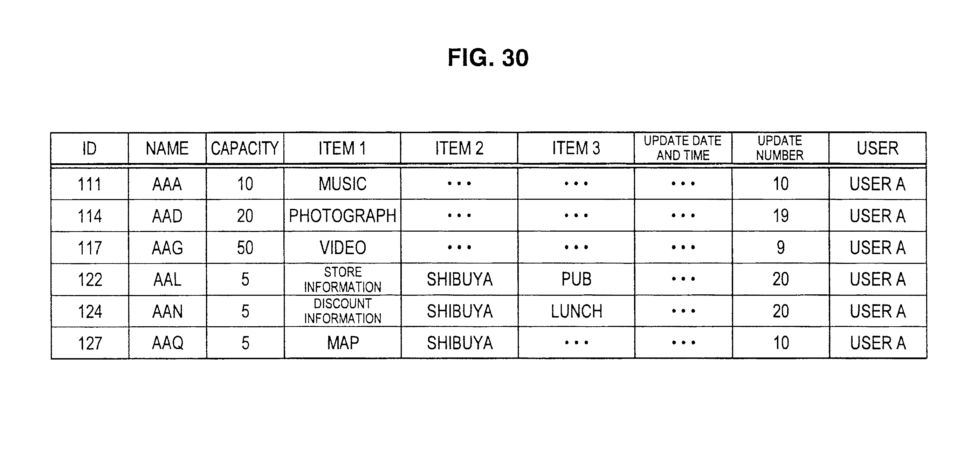

FIG. 30 shows data that the client 300 originally saved in the database 350 before synchronization. When transmitting data based on the difference, the difference between the data shown in FIG. 30 and the data selected in FIG. 29 is detected, and the difference data (differing data) is transmitted from the server 200 to the client 300.

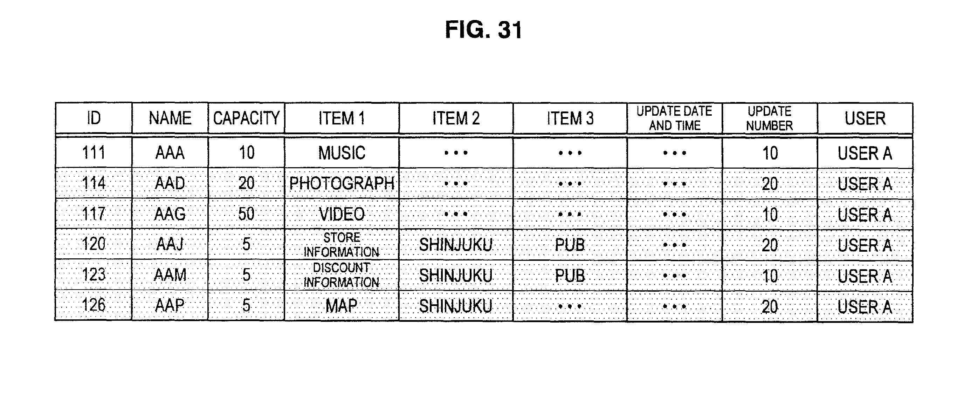

FIG. 31 shows a state of the synchronized database 350 of the client 300. Similarly to the first embodiment, the difference is detected taking into consideration not only the name of the data but also the update time and update number, and the data capacity. For instance, assume that the analysis is made that the user A is scheduled to go to Shinjuku for a meeting and to eat and drink with a friend after the meeting based on the result of analyzing the agenda, the e-mail, and the notepad stored in the server 200 or another server, or the client. In this case, information on Japanese-style bars in Shinjuku is synchronized with (copied to) the database 350 of the client 300 according to the activity schedule of the user A, as shown in FIG. 31.

### (4) Processing procedure in present embodiment

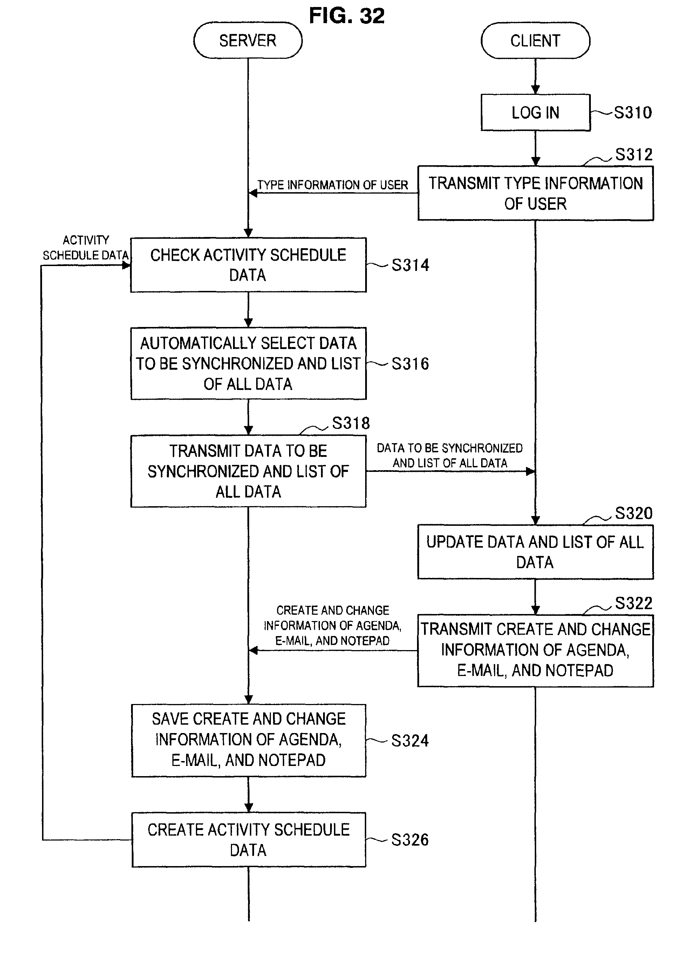

The procedure of the process in the present embodiment will now be described based on the flowcharts of FIGS. 32, 33 and 34.

FIG. 32 is a flowchart showing a typical process of the present embodiment. First, when the user logs in to the client 300 (step S310), the client 300 transmits the type information (user ID) of the user to the server 200 (step S312). The server 200 checks the activity schedule data of the user using the user ID (step S314). The data to be synchronized and the list of all data of the logged-in user are automatically selected using the activity schedule data (step S316). The server 200 transmits the selected data to be synchronized and the list of all data to the client 300 (step S318). The client 300 receives the data transmitted from the server 200, and the database 350 synchronizes with a part of the data selected by the server 200, and the list of all data held by the client 300 is updated (step S320).

The client 300 transmits created information and change information of the agenda, the e-mail, the notepad, and the like to the server 200 (step S322). When receiving such information, the server 200 saves the created information and the change information of the agenda, the e-mail, the notepad, and the like in the private content database 206 (step S324). The server 200 then creates the activity schedule data from the received information (step S326).

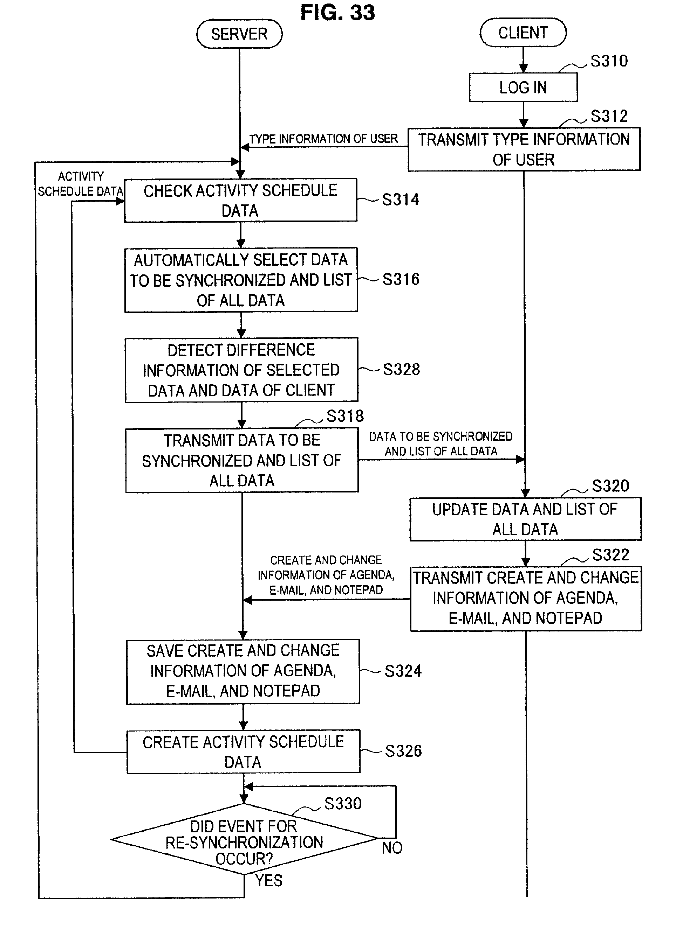

FIG. 33 is a flowchart showing a process of detecting the difference between the data selected on the server 200 side and the data of the client 300, receiving the difference data from the server and synchronizing (updating) in FIG. 32. FIG. 33 also shows an example of performing a task of automatically re-synchronizing a part of the database 350 at every certain event. In FIG. 33, the processes of steps S310, S312, S314, S316, S318, S320, S322, S324, and S326 are similar to those of FIG. 32.

The server 200 manages the data synchronized with the client 300 in the past to manage which data the client 300 is currently holding, thereby being aware of the data currently held by the client 300. Therefore, in step S328, the difference between the selected data to be synchronized and the data currently held by the client 300 is detected. The data to be synchronized obtained based on the difference and the list of all data are transmitted to the client 300 in step S318.

Since the activity schedule data changes by the minute, whether or not an event for re-synchronization such as a certain time period, operation of the client 300 by the user, change in the user environment or the like occurred is detected in step S330. If the event for re-synchronization occurred, the check on the activity schedule data is carried out again, and the data to be synchronized is selected using the most recent preference information and the habit information (step S314).

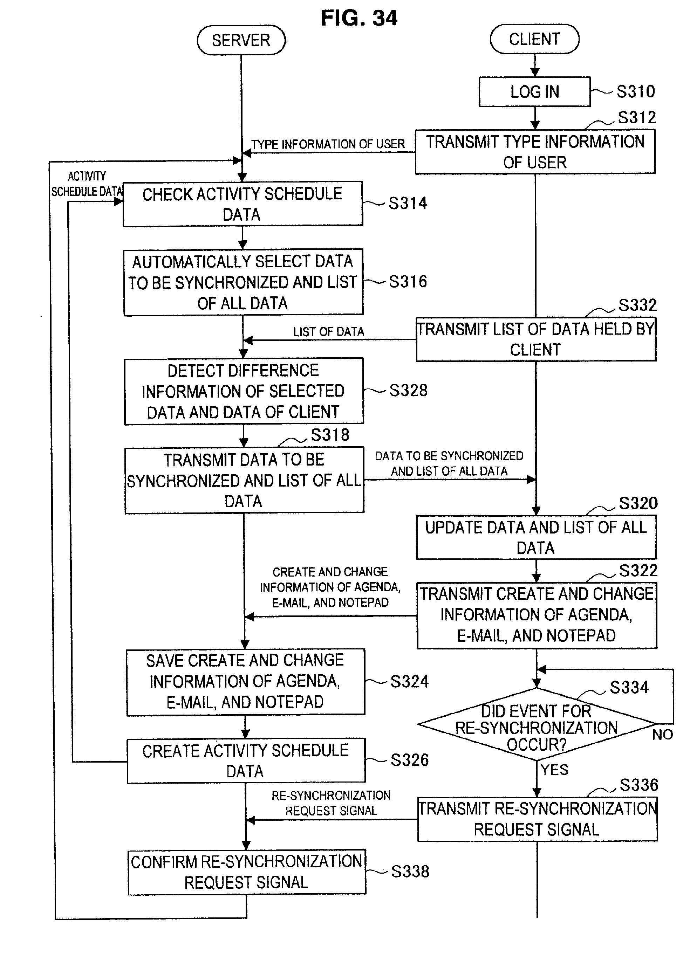

FIG. 34 is a flowchart showing an example in which the client 300 transmits the information for detecting the difference to the server 200 and the client 300 checks the occurrence of the event for re-synchronization in FIG. 33. In FIG. 34, the processes of steps S310, S312, S314, S316, S318, S320, S322, S324, S326, and S328 are similar to those of FIG. 33.

In the example of FIG. 34, the client 300 transmits a list of data currently being held in the database 350 to the server 200 (step S332). The server 200 detects the difference between the selected data to be synchronized and the data currently being held by the client 300 (step S328). The data to be synchronized obtained based on the difference and the list of all data are transmitted to the client 300 (step S318).

In the example of FIG. 34, whether or not the event for re-synchronization occurred is determined on the client 300 side (step 334), where the process proceeds to step S336 to transmit a re-synchronization request signal to the server 200 if the event for re-synchronization occurred. The server 200 returns to step S314 when the server 200 confirms the re-synchronization request signal (step S338) and then performs the subsequent processes to perform re-synchronization.

According to the third embodiment described above, only the necessary data is selected by the server 200 based on the activity schedule data, and the database 350 of the client 300 is synchronized by the selected data. Therefore, the amount of data to transmit from the server 200 can be suppressed to a minimum, and the time for synchronization can be greatly reduced. In addition, since the database 350 of the client 300 need not hold all data of the server 200, the capacity of the database 350 can be suppressed to a minimum.

### <4. Fourth embodiment>

A fourth embodiment of the present invention will now be described. In the fourth embodiment, synchronization is carried out based on movement prediction data of the user.

### (1) Block configuration of server and client

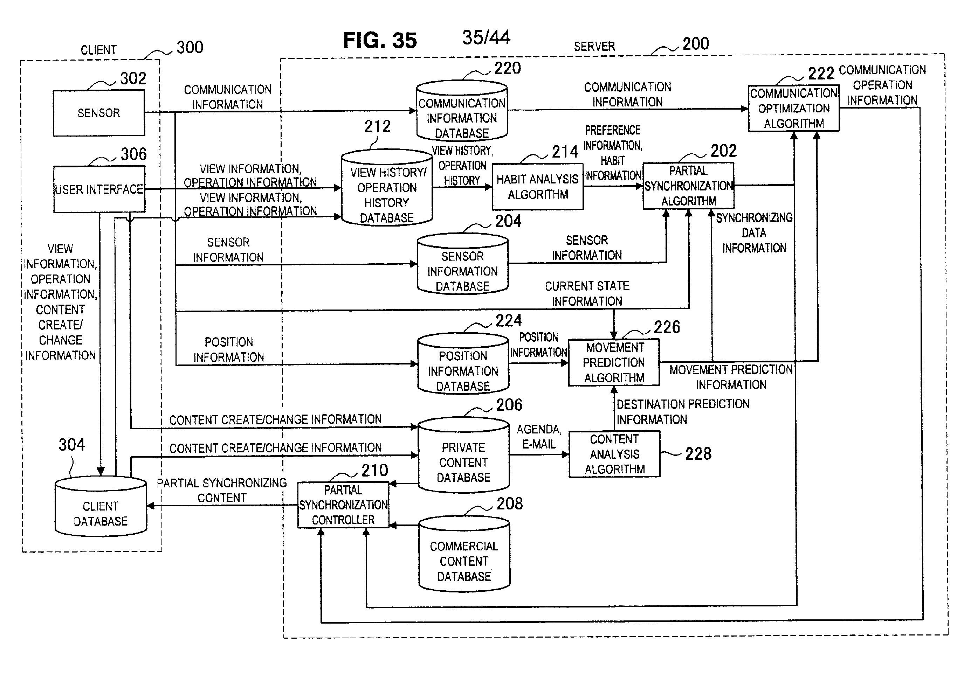

FIG. 35 is a block diagram showing a functional configuration of the server 200 and the client 300. As shown in FIG. 35, the server 200 includes a communication information database 220, a communication optimization algorithm 222, the view history/operation history database 212, the habit analysis algorithm 214, the partial synchronization algorithm 202, and the sensor information database 204. The server 200 also includes a position information/movement history database 224, a movement prediction algorithm 226, the private content database 206, the commercial content database 208, and the content analysis algorithm 228.

As shown in FIG. 35, the client 300 includes the sensor 302, the user interface 306, and the client database 304. The user interface 306 transmits information such as the view information, the operation information, and the user ID to the server 200. The information (view information, operation information, content create/change information) acquired in the user interface 306 are transmitted directly to the server 200, or stored in the client database 304 and then transmitted from the client database 304 to the server 200. The client database 304 is a database for storing data of the content sent from the server 200. The client database 304 may be configured by the database 350.

The server 200 includes the communication information database 220 for saving the communication information regarding the communication environment transmitted from the client 300 or obtained from a plurality of clients. The server 200 stores the communication state (transmission rate, electric wave intensity) of a plurality of wireless or wired systems with respect to time and place in the communication information database 220.

The server 200 optimizes the selection of the communication time, the place, and the communication system (transmission rate selection, transmission power selection) according to the urgency of the data to synchronize (time and place to be synchronized at the very least), the data content, the amount of data, the power consumption for every communication system, and the communication expense for every wireless system. This optimization is carried out by the communication optimization algorithm 222.

In the client 300, the information is detected by the sensor 302 without the user being conscious thereof while the user is holding the client 300, and the sensor information detected by the sensor 302 is transmitted to the server 200. The sensor information is stored in the sensor information database 204 of the server 200. The sensor 302 of the client 300 detects the communication information and the position information, where the communication information is used for the update of the communication information database 220 and the position information is used for the update of the position information/movement history database 224. The view information and the operation information are acquired by the user interface 306, and are sent to the server 200 to update the view history/operation history database 212. Similarly to the second embodiment, history, etc., are stored in the server 200 and the preference information and the habit information are generated by the habit analysis algorithm 214 from the view history and the operation history to provide a meaningful service to the user.

The server 200 analyzes private content stored in the private content database 206 such as the agenda and the e-mail in the content analysis algorithm 226, and predicts the destination of movement of the user. The movement prediction algorithm 226 predicts the movement route from the current location to the destination based on the current state information of the client 300 or the state for a certain period up to the present time and the predicted destination. The movement prediction algorithm 226 predicts the movement route from the current location to the destination based on the history of the movement of the user of the past accumulated in the position information/movement history database 224. The partial synchronization algorithm 202 selects the optimum data to be synchronized desired for the future state, and creates the synchronizing data information using the preference information, the habit information, the sensor information, and the current state information according to the predicted movement prediction information (destination, movement route).

The communication optimization algorithm 222 creates communication operation information such as selection of time to perform the communication, place to perform the communication, and the communication system, selection of the transmission rate, and the selection of the transmission power. The communication operation information is created based on the communication environment in the movement route while taking into consideration the urgency of the selected data to be synchronized, the amount of data, the data content and the like according to the movement route. The partial synchronization controller 210 controls which data to synchronize, at what time, at which place, and with which communication system using the communication operation information and the synchronizing data information. The partial synchronization controller 210 partially synchronizes the private content, the commercial content, and the like with the client database 304 of the client 300.

According to the above configuration, even change in the communication environment by the change in place of the mobile terminal can be addressed by controlling also the selection of the place to perform the communication and the communication system in addition to the time to perform the communication using the communication information obtained in advance. Moreover, the urgency, the content, and the amount of the synchronizing data can be individually addressed, and lower power consumption and saving of the communication expense can be realized by switching among a plurality of communication systems. The destination and the movement rate are not input by the user, but are predicted on the server 200 side. Therefore, the selection of the time and place of communication, and the communication system (transmission rate selection, transmission power selection) can be controlled according to the movement prediction information even if the user does not input the destination and the movement route. Change in the communication environment by time zone and change in communication environment for every wireless system can also be addressed by accumulating and using the communication state transmitted from the client 300 or obtained from a plurality of clients 300.

In the fourth embodiment, the amount of data to be synchronized can be further narrowed as compared to the first to third embodiments, and thus further miniaturization of the database 350 and higher speed of the synchronization process can be realized. In addition, the accuracy of narrowing the content for synchronizing a part of the server 200 can be enhanced as the movement prediction is used.

### (2) Example of movement prediction of user

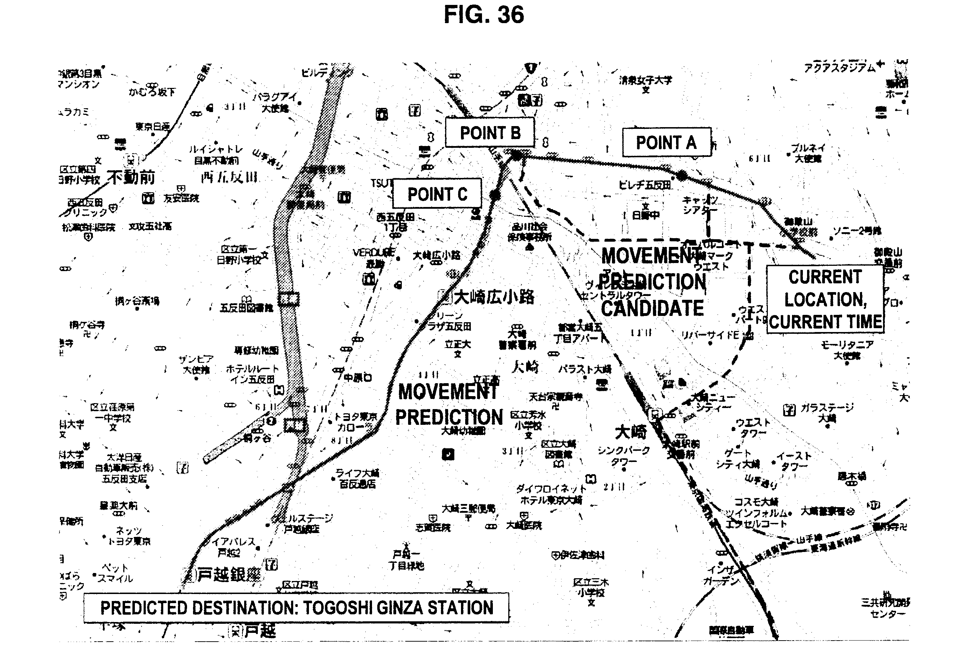

FIG. 36 is a schematic view showing an example of the movement prediction. In the present embodiment, the client 300 is assumed to be a portable terminal. The client 300 includes a sensor for acquiring position and current time. The sensor information is sent to the server 200, so that the server 200 knows the current position and the current time of the client 300. The server 200 predicts how the user A moves in the future from the current position and the current time of the user A using the movement history up to now of the user A using the client 300 or the movement history of another user.

For the prediction method, the probability that the user will move is obtained for each of a plurality of movement routes (shown with solid line and broken line) along which the user A moves at the current time on the current day of the week using the past movement history, and the movement route having the highest probability is selected. Alternatively, the movement route is predicted based on the candidates of the movement route obtained from the movement history according to the current state or the state for a certain period up to the present time using a learning algorithm, etc., that uses a hidden Markov model. In FIG. 36, a state in which the route shown with the solid line among the plurality of movement routes having the possibility the user A will move is selected as the route having the highest probability. In the movement prediction, a method of analyzing the personal content such as agenda, e-mail, and notepad to obtain the schedule in the future, and predicting the destination may be used in addition to the method of predicting the movement route and the destination using only the movement history. Thus, how the user A will move in the future can be predicted with respect to the current location and the current time of the user A.

### (3) Example of movement prediction and communication optimization

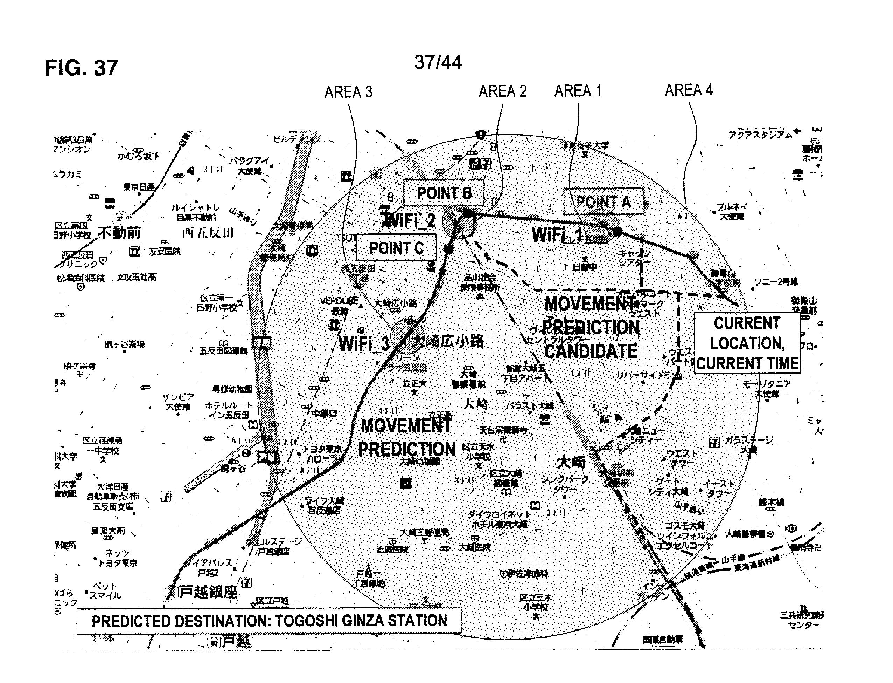

FIG. 37 is a schematic view showing an example of movement prediction and communication optimization. In the present embodiment, electric wave environment information such as the communication area and the communication speed in which and at which the client 300 communicates are acquired in the path (route shown with solid line in FIGS. 36 and 37) the client 300 moves. Specifically, the electric wave environment information such as the communication area and the communication speed of the WiFi or the portable telephone can be recognized from the communication history and the electric wave intensity measurement history of the user A, the arrangement information of the base stations of the carrier company of the portable telephone or the company managing the access points of the WiFi, and the information on the electric wave environment with respect to the position. The accuracy of the electric wave environment information can be further enhanced by collecting the communication history and the electric wave intensity history from a plurality of other clients 300 to the server 200. When, at which position, using what communication system, and what speed the communication can be carried out in the route along which the movement is predicted can be known by comparing the electric wave environment information and the route of the movement prediction.

In the example of FIG. 37, the server 200 recognizes that the communication by WiFi (WiFi_1, WiFi_2, WiFi_3) is possible in the areas 1, 2, 3 from the electric wave environment information. In area 4, the server 200 recognizes that the communication by the 3G portable telephone is possible. Therefore, the server 200 can know the electric wave environment information available to the client 300 in the path along which the client 300 moves.

### (4) Partial synchronization based on movement prediction

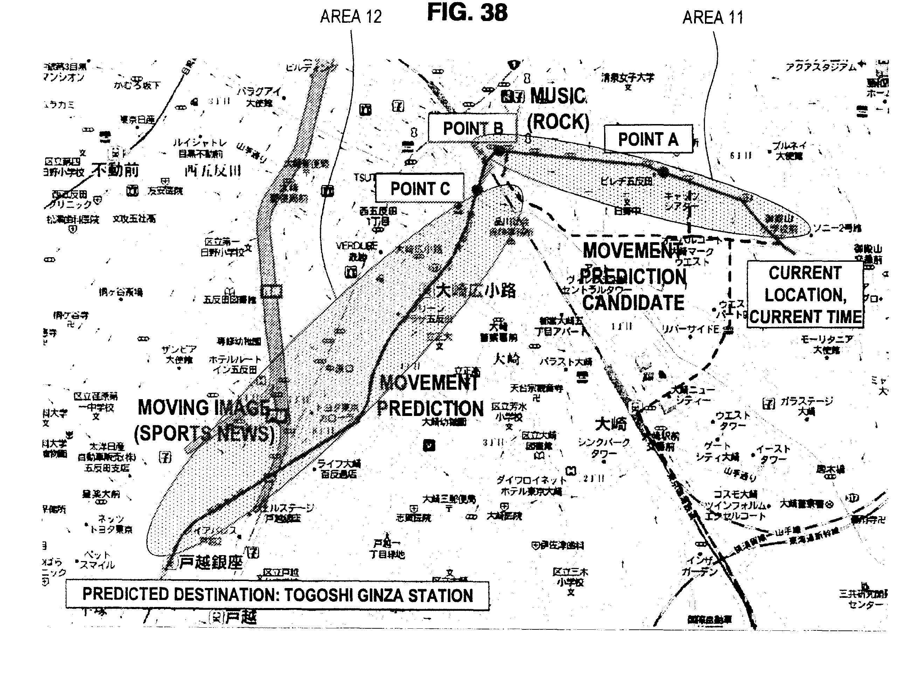

FIG. 38 is a schematic view showing an example of performing partial synchronization based on the movement prediction. When, where, and what data the user was viewing can be known by using the view history/operation history, and the like of the user, and the habit and the preference of viewing corresponding to place and time can be known. When, at which position, and what data is to be viewed at high possibility in the route along which the movement is predicted can be known by comparing the information on the habit and the preference corresponding to place and time with the route of the movement prediction. The data corresponding to the destination (activity prediction) analyzed from the personal content can also be synchronized.

In the example of FIG. 38, it is obtained that the user A was mainly listening to music (rock) in area 11 from the past view history/operation history. It is also obtained that the user A was viewing the moving image (sports news) in area 12. Therefore, the server 200 transmits the user A the music (rock) data so that the user A can listen to music (rock) in area 11. The server 200 also transmits the user A the moving image (sports news) data so that the user A can view the moving image (sports news) in area 12.

### (5) Example of communication optimization and partial synchronization

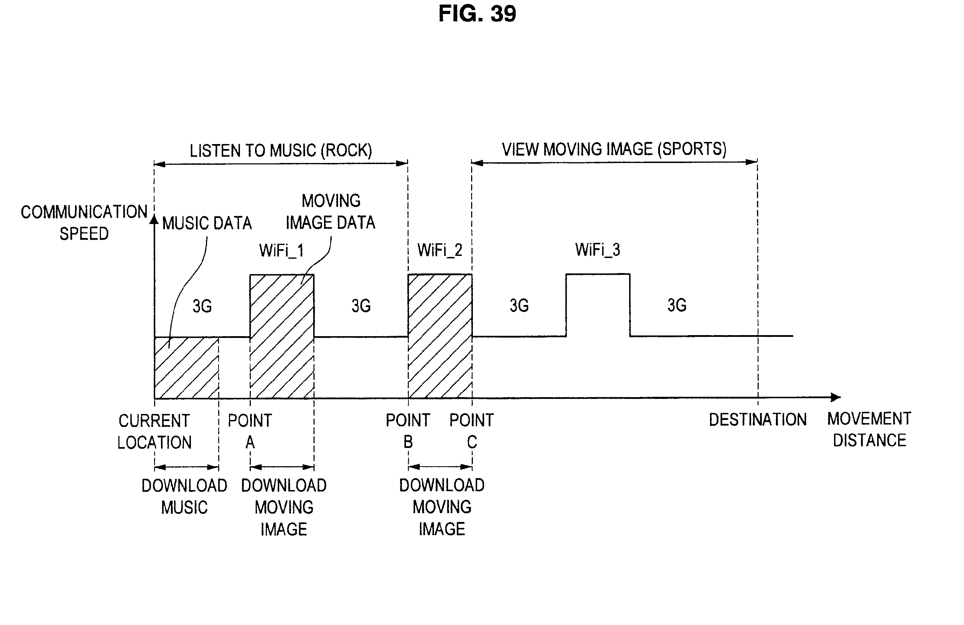

FIG. 39 is a schematic view showing an example of communication optimization and partial synchronization. Describing in comparison with FIGS. 36 to 38, rock music is predicted to be listened from the current point to point B. Therefore, synchronizing the music data has high urgency, and synchronization is carried out immediately from the current location. In this case, synchronization is carried out using the 3G portable telephone network as shown in FIG. 37 since the urgency is high although the communication speed is slow, the communication charge is high, and the power consumption is high.

Since the synchronization of the music data is finished before point A, all the desired music data is synchronized with the client even if the client is in off-line state from point A to point B. Therefore, the user A can listen to the music (rock). The connection areas (areas 1, 2) with the WiFi are provided near point A and point B, and the communication is planned so as to preferentially synchronize the music data having high urgency before point C since the moving image of sports news is predicted to be desired after point C. At the same time, the communication is planned to synchronize the moving image data using the communication system having higher communication speed, lower communication charge, and lower power consumption. If the WiFi near point A (area 1) and near point B (area 2) are used, the communication speed is enough for synchronization with respect to the capacity of the moving image data to be synchronized, and thus the moving image data is synchronized using only the WiFi near point A and near point B.

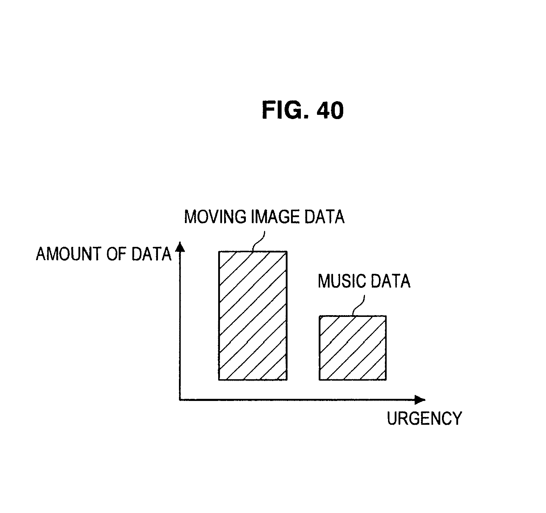

FIG. 40 shows the urgency of synchronization and the amount of data at the current location for the "music data" and the "moving image data" shown in FIG. 39. When the prediction of the movement path of the user is completed at the current location, the server 200 recognizes that both "music data" and "moving image data" are desirably synchronized to the client 300. The "music data" has high urgency since there is a possibility that the user may immediately listen from the current location. Thus, in view of the urgency and the amount of data of the "music data", synchronization is carried out using the 3G portable telephone network as shown in FIG. 39. For the "moving image data", on the other hand, synchronization is to be merely completed before point C. As it can be known at the current location that the WiFi of area 1 and area 2 can be used before point C, the synchronization is carried out using the WiFi of area 1 and area 2 in view of the urgency and the amount of data of the "moving image data".

### (6) Concept of transmission and reception of data between server and client

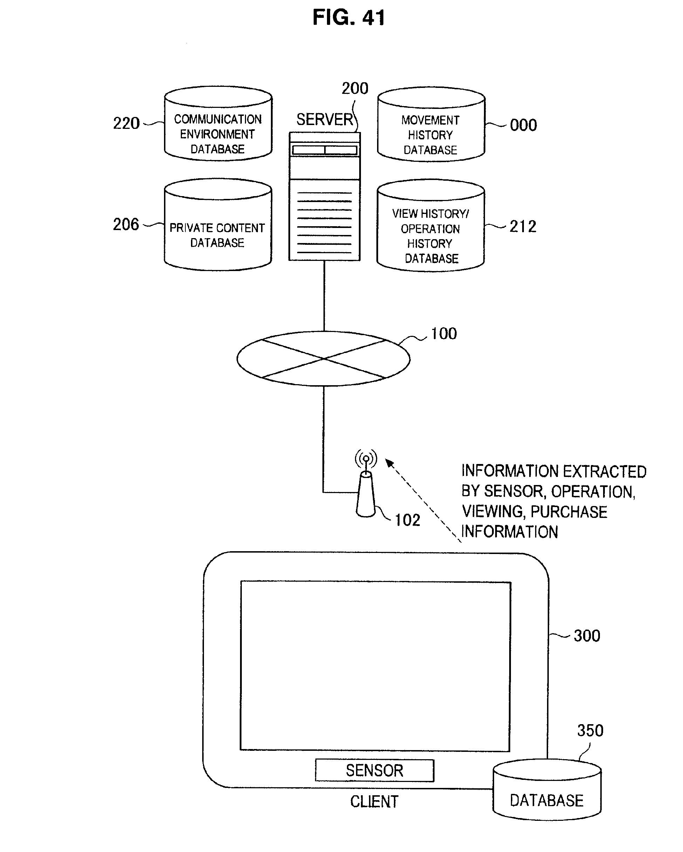

FIG. 41 is a schematic view showing an operation example of the server 200 and the client 300 at the time of sensing. The information extracted by the sensor such as time information and place information, and the history information such as operation history, view history, and purchase history are sent from the client 300 to the server 200. The server 200 saves the history information and the information extracted by the sensor in the database 250, and uses the same for activity prediction, synchronization optimization, and communication optimization.

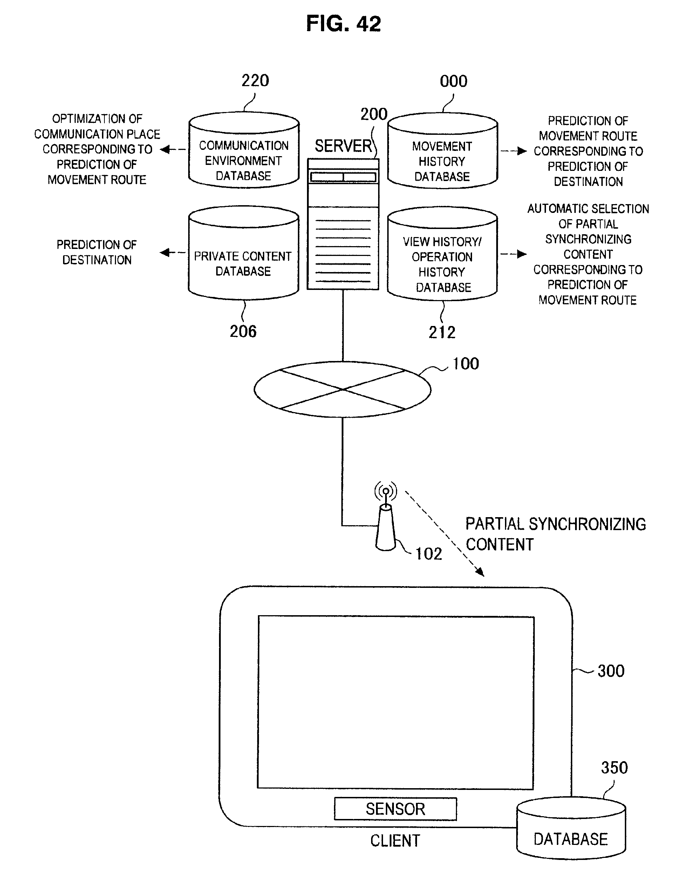

FIG. 42 is a schematic view showing an operation example of the server 200 and the client 300 at the time of synchronization. The optimum data is synchronized at the optimum communication timing according to the current location and the current time of the client 300. The agenda, etc., are analyzed from the private content database 206, and the destination is predicted. The movement route corresponding to the prediction of the destination is predicted based on the movement history database. The prediction of the destination uses the analysis of the private content or uses only the movement history. The selection of the time to perform the communication, the place to perform the communication, and the communication system, the selection of the transmission rate, the selection of the transmission power and the like corresponding to the prediction of the movement route are made using the communication environment database. The data to be partially synchronized is automatically selected according to the prediction of the movement route from the view history database.

### (7) Other block configuration

In FIG. 35, an example of selecting the partial synchronization data based on the communication information, the view information, the operation information, the sensor information, and the position information has been shown, but if all information need not be used, the data to be partially synchronized may be selected using only some information.

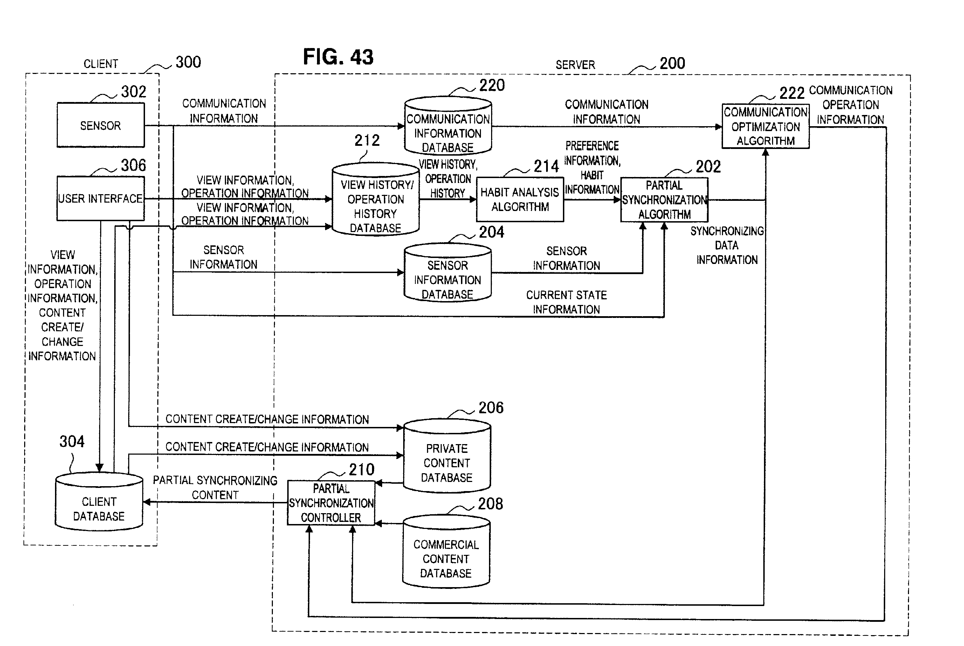

For instance, FIG. 43 shows a block diagram when selecting the partial synchronizing data from the preference information, the habit information, the sensor information, and the current state information without performing the movement prediction, and synchronizing according to the communication information.

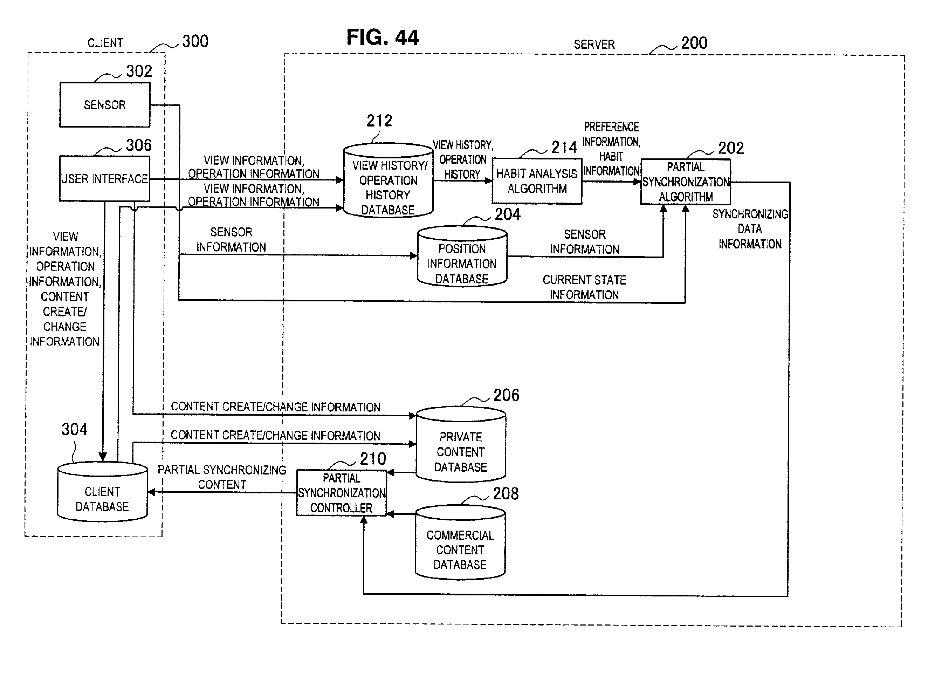

FIG. 44 shows a block diagram when selecting the partial synchronizing data from the preference information, the habit information, the sensor information, and the current state information without performing the movement prediction and the communication optimization, and then synchronizing.

As described above, when synchronizing all data saved in the server, a larger capacity for the storage capacity of the database of the client 300 is desired, and the synchronization time becomes longer. According to the present embodiments, only the data desired for the relevant person, the relevant device, the relevant time, and the relevant place are copied from enormous database of a server so that useless data that will not be viewed are not saved in the database 350 of the client 300. Therefore, miniaturization and lower cost of the client 300 are achieved. As all data are not copied, the communication cost can be saved and the transmission and reception power can be saved. Furthermore, only the necessary data can be listened to and viewed in off-line, and urgent viewing and listening of data are also possible by synchronizing before viewing and listening.

It should be understood by those skilled in the art that various modifications, combinations, sub-combinations and alterations may occur depending on design requirements and other factors insofar as they are within the scope of the appended claims or the equivalents thereof.
The present application contains subject matter related to that disclosed in Japanese Priority Patent Application JP 2009-055774 filed in the Japan Patent Office on March 9, 2009, the entire content of which is hereby incorporated by reference.

## Claims

1. An information providing server comprising:
a state information acquiring unit for acquiring state information related to a state of a user using a client terminal detected at the client terminal connected through a communication network;
a database for accumulating data of a content to be used by the user;
a selection unit for selecting a part of the data accumulated in the database based on the state information; and
a transmission unit for transmitting the data selected by the selection unit to the client terminal.

2. The information providing server according to claim 1, wherein
the selection unit includes a difference data selection part for selecting difference data corresponding to a difference between existing accumulated data already accumulated in the database of the client and data selected based on the state information; and
the transmission unit transmits the difference data to the client terminal.

3. The information providing server according to claim 2, wherein the difference data selection part selects the difference data based on data update date and time or data update number for each of the existing accumulated data and the data selected based on the state information.

4. The information providing server according to any of claims 1 to 3, wherein the state information related to the state of the user is at least one of time information, place information, operation information, video information, audio information, pressure information, smell information, temperature information, humidity information, biological information, and purchase information.

5. The information providing server according to any of claims 1 to 4, further comprising:
an analyzing unit for analyzing information related to preference, habit, or activity schedule of the user based on the state information; and
the selection unit selects a part of the data accumulated in the database based on the information related to the preference, the habit, or the activity schedule of the user based on the state information.

6. The information providing server according to any of claims 1 to 5, further comprising:
an analyzing unit for analyzing information related to activity in the past or future of the user based on the state information; and
the selection unit selects a part of the data accumulated in the database based on the information related to the activity in the past or the future of the user.

7. The information providing server according to claim 6, wherein the information related to the past activity is information created from view history, operation history, purchase history, or activity history by the user.

8. The information providing server according to claim 6 or 7, wherein the information related to the future activity is information created from information saved in agenda, electronic mail, or notepad used by the user.

9. The information providing server according to any of claims 1 to 8, wherein
the selection unit selects a part of the data when a predetermined event occurs; and
the transmission unit transmits the selected data to the client terminal when the predetermined event occurs.

10. The information providing server according to any of claims 1 to 9, wherein the transmission unit transmits the selected data to the client terminal and also transmits a list of all data of the corresponding user to the client terminal.

11. The information providing server according to any of claims 1 to 10, further comprising:
a movement path analyzing unit for analyzing information related to future movement path of the user based on the state information; wherein
the selection unit selects a part of the data accumulated in the database based on the information related to the movement path.

12. The information providing server according to any of claims 1 to 11, further comprising:
a communication information acquiring unit for acquiring communication information related to a communication environment of the movement path as the state information; wherein
the selection unit selects a part of the data accumulated in the database based on the information related to the movement path and the communication information.

13. The information providing server according to any of claims 1 to 12, further comprising:
a preference and habit analyzing unit for analyzing information related to preference or habit of the user based on the state information; wherein
the selection unit selects a part of the data accumulated in the database based on the information related to the movement path, the communication information, and the information related to the preference or the habit of the user.

14. An information providing system comprising:
an information providing server including a state information acquiring unit for acquiring state information related to a state of a user using a client terminal, a database for accumulating data of a content to be used by the user; a selection unit for selecting a part of the data accumulated in the database based on the state information, and a transmission unit for transmitting the data selected by the selection unit to the client terminal; and
a client terminal including a state information detection unit for detecting the state information, a transmission unit for transmitting the state information to the information providing server connected through a communication network, and a database with which the selected data transmitted from the information providing server is synchronized.

15. An information providing method, comprising the steps of:
detecting state information related to a state of a user using a client terminal at the client terminal;
transmitting the state information to an information providing server connected through a communication network;
selecting a part of data from a database accumulating data of a content to be used by the user at the information providing server based on the state information;
transmitting the selected data to the client terminal; and
synchronizing the database with the selected data transmitted from the information providing server at the database of the client terminal.

16. A program for causing a computer to function as means for:
acquiring state information related to a state of a user using a client terminal detected at the client terminal connected through a communication network;
accumulating data of a content to be used by the user;
selecting a part of the data accumulated in the database based on the state information; and
transmitting the data selected by the selection unit to the client terminal.
